# EUROPEAN PATENT APPLICATION

(11) **EP 4 779 946 A1**
(43) Date of publication of application: **22.07.2026**
(21) Application number: 24867273.5
(22) Date of filing: 30.08.2024
(51) Int. Cl.: H04L 41/16, G06N 3/08

(54) **COMMUNICATION METHOD AND APPARATUS**

(30) Priority: 20.09.2023 CN 202311216424
(71) Applicant: HUAWEI TECHNOLOGIES CO., LTD., Shenzhen 518129 (CN)
(72) Inventor: HU, Xiang, Shenzhen, Guangdong 518129 (CN)
(74) Representative: Pfenning, Meinig & Partner mbB
(86) International application number: PCT/CN2024/116094
(87) International publication number: WO 2025/060861

(57) **Abstract**

This application provides a communication method and apparatus, and relates to the field of communication technologies. A first network function receives a request message from a third network function, where the request message is used for requesting an access address of a second network function associated with target artificial intelligence AI information; the first network function queries an association relationship based on the request message, to obtain the access address of the second network function associated with the target AI information, where the association relationship indicates at least one piece of AI information supported by at least one second network function and a relationship between the at least one piece of AI information supported by the at least one second network function and an access address of a second network function associated with each piece of AI information, and the target AI information is one of the at least one piece of AI information; and the first network function sends a request response message to the third network function, where the request response message indicates the access address of the second network function associated with the target AI information. In this way, intelligent services can be provided for devices.

## Description

### CROSS-REFERENCE TO RELATED APPLICATIONS

This application claims priority to Chinese Patent Application No. 202311216424.7, filed with the China National Intellectual Property Administration on September 20, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In terms of standardization, the 3rd generation partnership project (3rd generation partnership project, 3GPP) has begun and continued work on 5th generation (5th generation, 5G) systemic intelligence and management architectures, and has standardized the definition of intelligent services, such as artificial intelligence (artificial intelligence, AI) services. However, a solution for how to specifically provide services for devices based on the intelligent services has not been proposed.

### SUMMARY

This application provides a communication method and apparatus, to provide intelligent services for devices.

According to a first aspect, this application provides a communication method. The method may be applied to a first network function, where AI information of a network element is registered with the first network function. The first network function may be an artificial intelligence repository service (artificial intelligence repository function, AIRF), and is specially configured to implement registration of the AI information. Alternatively, the first network function may be a functional entity disposed in a network repository function (network repository function, NRF) network element, and is configured to implement registration of the AI information. This is not specifically limited in this application. When the method is performed by the first network function, the method includes:
receiving a request message from a third network function, where the request message is used for requesting an access address of a second network function associated with target AI information; querying an association relationship based on the request message, to obtain the access address of the second network function associated with the target AI information, where the association relationship indicates at least one piece of AI information supported by at least one second network function and a relationship between the at least one piece of AI information supported by the at least one second network function and an access address of a second network function associated with each piece of AI information, and the target AI information is one of the at least one piece of AI information; and sending a request response message to the third network function, where the request response message indicates the access address of the second network function associated with the target AI information.

In this application, the first network function receives the request message for the access address associated with the target AI information, queries for the corresponding access address, and feeds back the access address to the third network function, so that the third network function can obtain an intelligent service by using the access address. In this way, an AI service can be provided for the third network function.

In an optional manner, when the request message is a subscription request message, the sending the request response message to the third network function includes: sending a subscription success notification message to the third network function, and sending, to the third network function, an access address of a second network function associated with the at least one piece of AI information.

During actual application, the subscription success notification and the access address of the second network function associated with the at least one piece of AI information are not sent at the same time. For example, the subscription success notification message is sent at first time, and the access address of the second network function associated with the at least one piece of AI information is sent at second time. In addition, the foregoing subscription success notification and the access address of the second network function associated with the at least one piece of AI information may be sent by using same signaling, or may be sent by using different signaling. This is not specifically limited herein. In this application, the subscription request message is used as the request message, and a message format of the subscription request message can be reused. In this way, the message format does not need to be reconstructed, so that data processing complexity can be reduced.

In an optional manner, when the request message is a query request message, the sending the request response message to the third network function includes: sending, to the third network function, the access address of the second network function associated with the target AI information.

In this application, the query request message is used as the request message, and a message format of the query request message can be reused. In this way, the message format does not need to be reconstructed, so that data processing complexity can be reduced.

In an optional manner, the first network function further receives a registration request message from the at least one second network function, where the registration request message indicates the at least one piece of AI information supported by the second network function and the access address of the second network function associated with each piece of AI information; and the first network function determines the association relationship based on the registration request message.

In this application, after receiving the AI information registered by the second network function, the first network function may establish an association relationship between the AI information and the access address of the second network function, so that when the third network function requests, from the first network function, the access address of the second network function associated with the AI information, the first network function can query the association relationship for an access address of a second network function that can provide an AI service, and return the access address to the third network function.

In an optional manner, the first network function further sends a monitoring message to the second network function, where the monitoring message is used for monitoring an operating status of the second network function; and the first network function receives a monitoring response message from the second network function.

In this application, the operating status of the second network function may be understood as a change of the AI information supported by the second network function or an actual operating status of the second network function. This is not specifically limited in this application.

In one case, after the second network function registers a specific piece of AI information with the first network function, the AI information supported by the second network function may change. For example, the second network function is an NWDAF1, the NWDAF1 has registered, with the first network function at first time, AI information for image processing supported by the NWDAF1, and the AI information supported by the NWDAF1 changes at second time (that is, time after the first time), where for example, AI information for audio processing is added. If the first network function sends the monitoring message to the NWDAF1, a change message of the AI information supported by the second network function can be monitored in real time. In this case, registration information stored by the first network function can be adjusted in a timely manner.

In another case, after the second network function registers a specific piece of AI information with the first network function, the actual operating status of the second network function changes. For example, the second network function is an NWDAF1, the NWDAF1 has registered, with the first network function at first time, AI information for image processing supported by the NWDAF1, and the device NWDAF1 fails at second time. If the first network function sends the monitoring message to the NWDAF1, the NWDAF1 can be monitored in real time. If it is determined that the NWDAF1 has failed, it is determined that the NWDAF1 cannot provide an AI service for image processing. In this case, registration information stored by the first network function can be adjusted in a timely manner.

In an optional manner, the third network function is a terminal; and the receiving the request message from the third network function includes: The first network function receives the request message sent by the third network function through a fourth network function, where the fourth network function is configured to perform format conversion on a message exchanged between the terminal and the first network function, and/or perform identity authentication on the terminal and the first network function.

In this application, the fourth network function is used as a bridge for information exchange between the first network function and the terminal, so that the terminal can request, from the first network function through the fourth network function, an access address associated with the AI information. In this way, the terminal can obtain an intelligent service. In addition, the fourth network function can perform format conversion on the message exchanged between the terminal and the first network function, to improve data processing efficiency. In addition, performing identity authentication on the terminal and the first network function can ensure security of information exchange between the terminal and the first network function.

In an optional manner, the AI information includes an AI service and/or AI computational power.

In this application, the AI information may be the AI service, for example, image processing, audio processing, or neural network model construction. This is merely an example for description herein, and does not constitute a specific limitation. Alternatively, the AI information may be the AI computational power, for example, computation of a random forest algorithm that can be supported by a central processing unit (central processing unit, CPU) of a specific network element. This is merely an example for description herein, and does not constitute a specific limitation.

In an optional manner, the AI information is an AI service, and the registration request message includes an identifier of the AI service and an access address of a second network function that provides the AI service.

In this application, when the AI information is the AI service, the registration request message includes the identifier of the AI service and the access address of the second network function that provides the AI service, so that the first network function can know specific information about the AI service and the access address of the second network function that provides the AI service. For example, the identifier of the AI service is T1 (it is predefined that T1 corresponds to image recognition processing), and it can be learned that the second network function that performs registration with the first network function supports an image recognition processing function.

In an optional manner, the registration request information further includes one or more of the following:
a type of the AI service, a model type supported by the AI service, a service object of the AI service, a data format supported by the AI service, and a data computing scale of the AI service. The service object of the AI service includes a terminal device type, an APP name, an end user belonging to a preset number range, geographical location information, slice information, and an access point identifier.

Specifically, the type of the AI service is, for example, cloud photographing, image processing, facial recognition, translation, or chat with a chat generative pre-trained transformer (chat generative pre-trained transformer, ChatGPT). The model type supported by the AI service is, for example, a convolutional neural network (convolutional neural network, CNN), a recurrent neural network (recurrent neural network, RNN), or a random forest. The service object of the AI service is a target object of the AI service. The data format supported by the AI service is, for example, RGB data (where an RGB image is a digital image format with a name indicating color space (red, green, and blue) that the image format employs and indicating that the image includes pixel values of red, green, and blue channels) or YUV data (where a YUV image is a digital image format that separates image luminance (Y) and color (U and V), and is commonly used in the field of video coding and digital image processing, and common YUV sampling and arrangement manners are described below) when the AI service is image recognition. The data computing scale of the AI service is, for example, a quantity and a scale of image recognition tasks when the AI service is image recognition. The service object of the AI service includes the terminal device type (for example, an internet of things device or a mobile phone), the APP name (for example, instant messaging software or video software), the end user belonging to the preset number range (for example, an end user within an international mobile subscriber identity (international mobile subscriber identity, IMSI)/mobile station international ISDN number (mobile station International ISDN number, MSISD) (that is, a mobile phone number) number range), the geographical location information (for example, a specific location), the slice information (for example, a specific slice through which a service is received), and the access point identifier (for example, a transmission reception point (transmission reception point, TRP) 1 through which a service is received). For example, if the identifier of the AI service is AI1, and a service object of the AI1 is an internet of vehicles device located in Shanghai, the AI1 provides an AI service only for the internet of vehicles device in Shanghai. This is merely an example for description herein, and does not constitute a specific limitation on the service object of the AI service.

In an optional manner, the AI information is AI computational power, and the registration request information includes an identifier of the AI computational power and an access address of a second network function that provides the AI computational power.

In this application, when the AI information is the AI computational power, the registration request message includes the identifier of the AI computational power and the access address of the second network function that provides the AI computational power, so that the first network function can know specific information about the AI computational power and the access address of the second network function that provides the AI computational power. For example, the identifier of the AI computational power is S1 (it is predefined that S1 corresponds to random forest computing), and it can be learned that the second network function that performs registration with the first network function supports a random forest computing function.

In an optional manner, the registration request information further includes one or more of the following:
a computational power type of the AI computational power, a computational power specification of the AI computational power, an AI framework type indicated by the AI computational power, an AI model type indicated by the AI computational power, and operator information of the AI computational power.

Specifically, the computational power type of the AI computational power is, for example, a computational power resource that can run an AI task, such as an X86/ARM CPU, a graphics processing unit (graphics processing unit, GPU), or an embedded neural network processing unit (neural network processing unit, NPU). The computational power specification of the AI computational power is, for example, a computational power evaluation indicator: transactions per second (transactions per second, TPS) or queries per second (queries per second, QPS). The AI framework type indicated by the AI computational power is, for example, TensorFlow, Mindspore, or SKlearn. The AI model type indicated by the AI computational power is, for example, a CNN, an RNN, or a random forest. In addition, the operator information of the AI computational power is, for example, vector computing or matrix computing.

According to a second aspect, this application provides a communication method. The method may be applied to a fourth network function, and the fourth network function is a proxy network element. The fourth network function may be configured to establish a connection bridge between a third network function and a first network function, and may be further configured to perform identity authentication on the first network function and the third network function. This is not specifically limited in this application. When the method is performed by the fourth network function, the method includes:
receiving a request message from the third network function, where the request message is used for requesting an access address of a second network function associated with target artificial intelligence AI information; sending the request message to the first network function; receiving a request response message from the first network function, where the request response message indicates the access address of the second network function associated with the target AI information; and sending the request response message to the third network function.

In an optional manner, when the request message is a subscription request message, the receiving the request response message from the first network function includes: receiving a subscription success notification message; and receiving, from the first network function, an access address of a second network function associated with at least one piece of AI information.

In an optional manner, when the request message is a query request message, the receiving the request response message from the first network function includes: receiving, from the first network function, the access address of the second network function associated with target AI information.

In an optional manner, the third network function is a terminal, and the fourth network function further performs format conversion on a message exchanged between the third network function and the first network function; and/or performs identity authentication on the third network function and the first network function.

In an optional manner, the fourth network function further receives to-be-processed data from the terminal; converts the to-be-processed data into a data format corresponding to AI information required by the terminal, and then sends converted data to an access address of a second network function associated with the AI information required by the terminal; receives a data processing result from the second network function; and sends the data processing result to the terminal.

According to a third aspect, this application provides a communication method. The method may be applied to a third network function, and the third network function is a terminal or another network element in a core network. This is not specifically limited in this application. When the method is performed by the third network function, the method includes:
sending a request message to a fourth network function, where the request message is used for requesting an access address of a second network function associated with target artificial intelligence AI information; receiving a request response message from the fourth network function, where the request response message indicates the access address of the second network function associated with the target AI information; sending, through the fourth network function, to-be-processed data to the access address of the second network function associated with the target AI information; and receiving a data processing result from the second network function through the fourth network function.

In an optional manner, the third network function is a terminal.

According to a fourth aspect, this application provides a communication method. The method may be applied to a second network function, and the second network function has a capability of performing AI processing, and can perform an AI service or perform AI computation. This is not specifically limited in this application. When the method is performed by the second network function, the method includes:
sending a registration request message to a first network function, where the registration request message indicates at least one piece of AI information supported by the second network function and an access address of the second network function associated with each piece of AI information; and receiving a registration success response message from the second network function.

In an optional manner, the second network function further receives a monitoring message from the first network function, where the monitoring message is used for monitoring an operating status of the second network function; and the second network function sends a monitoring response message to the first network function, where the monitoring response message includes the operating status of the second network function.

In an optional manner, the AI information includes an AI service and/or AI computational power.

In an optional manner, the AI service includes one or more of the following: an identifier of the AI service, an access address of a second network function that provides the AI service, a type of the AI service, a model type supported by the AI service, a service object of the AI service, a data format supported by the AI service, and a data computing scale of the AI service. The service object of the AI service includes a terminal device type, an APP name, an end user belonging to a preset number range, geographical location information, slice information, and an access point identifier.

In an optional manner, the AI computational power includes one or more of the following:
an identifier of the AI computational power, a computational power type of the AI computational power, a computational power specification of the AI computational power, an AI framework type indicated by the AI computational power, an AI model type indicated by the AI computational power, and operator information of the AI computational power.

According to a fifth aspect, an embodiment of this application provides a communication apparatus. The communication apparatus may be the foregoing first network function or a chip disposed in the first network function, or may be the foregoing second network function or a chip disposed in the second network function, or may be the foregoing third network function or a chip disposed in the third network function, or may be the foregoing fourth network function or a chip disposed in the fourth network function. The communication apparatus has a function of implementing any one of the first aspect to the fourth aspect. For example, the communication apparatus includes a corresponding module, unit, or means (means) for performing the steps in any one of the first aspect to the fourth aspect. The function, unit, or means may be implemented by using software, implemented by using hardware, or implemented by hardware executing corresponding software.

In a possible design, the communication apparatus includes a processing unit and a transceiver unit. The transceiver unit may be configured to receive and transmit a signal, to implement communication between the communication apparatus and another apparatus. The processing unit may be configured to perform some internal operations of the communication apparatus. The transceiver unit may be referred to as an input/output unit, a communication unit, or the like. The transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to send and receive a signal, and the processor executes program instructions, to complete the method in any possible design or implementation of the first aspect to the fourth aspect. The communication apparatus may further include one or more memories. The memory is configured to be coupled to the processor, and the memory may store a necessary computer program or necessary instructions for implementing the function in any one of the first aspect to the fourth aspect. The processor may execute the computer program or the instructions stored in the memory. When the computer program is executed or the instructions are executed, the communication apparatus is caused to implement the method in any possible design or implementation in the first aspect to the fourth aspect.

In still another possible design, the communication apparatus includes a processor. The processor may be configured to be coupled to a memory. The memory may store a necessary computer program or instructions for implementing the function in any one of the first aspect to the fourth aspect. The processor may execute the computer program or the instructions stored in the memory. When the computer program is executed or the instructions are executed, the communication apparatus is caused to implement the method in any possible design or implementation in the first aspect to the fourth aspect.

In yet another possible design, the communication apparatus includes a processor and an interface circuit. The processor is configured to communicate with another apparatus through the interface circuit, and perform the method in any possible design or implementation of the first aspect to the fourth aspect.

It may be understood that in the fifth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in a memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a sixth aspect, an embodiment of this application provides a communication system. The communication system includes the first network function, the second network function, the third network function, and the third network function in the first aspect to the fourth aspect.

According to a seventh aspect, this application provides a chip system. The chip system includes a processor, and may further include a memory, configured to implement the method in any one of the possible designs of the first aspect to the fourth aspect. The chip system may include a chip, or may include a chip and another discrete component.

According to an eighth aspect, this application further provides a computer-readable storage medium. The computer-readable storage medium stores computer-readable instructions. When the computer-readable instructions are run on a computer, the computer is caused to perform the method in any one of the possible designs of the first aspect to the fourth aspect.

According to a ninth aspect, this application provides a computer program product including instructions. When the computer program product runs on a computer, the computer is caused to perform the method in various embodiments of the first aspect to the fourth aspect.

For technical effects that can be achieved in the second aspect to the ninth aspect, refer to descriptions of technical effects that can be achieved in the corresponding possible design solutions in the first aspect. Details are not described herein again in this application.

### BRIEF DESCRIPTION OF DRAWINGS

FIG. 1A is a diagram of a communication system;
FIG. 1B is a diagram of another communication system;
FIG. 2 is a diagram of still another communication system;
FIG. 3 is a schematic flowchart of a communication method;
FIG. 4 is a schematic flowchart of a communication method;
FIG. 5A and FIG. 5B are a schematic flowchart of a communication method;
FIG. 6A and FIG. 6B are a schematic flowchart of a communication method;
FIG. 7A and FIG. 7B are a schematic flowchart of a communication method;
FIG. 8A and FIG. 8B are a schematic flowchart of a communication method;
FIG. 9 is a schematic flowchart of a communication method;
FIG. 10 is a schematic flowchart of a communication method;
FIG. 11 is a diagram of a structure of a communication apparatus according to an embodiment of this application;
FIG. 12 is a diagram of a structure of another communication apparatus according to an embodiment of this application; and
FIG. 13 is a diagram of a structure of another communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two. Therefore, for implementations of the apparatus and the method, reference may be made to each other, and repeated parts are not described again.

To cope with challenges of wireless broadband technologies and maintain a leading advantage of a 3rd generation partnership project (3rd generation partnership project, 3GPP) network, the 3GPP standard group has formulated a next generation mobile communication network system (Next Generation System) architecture, which is referred to as a 5G network architecture. The architecture not only supports access to a 5G core network (core network, CN) by using a radio access technology (for example, a long term evolution (long term evolution, LTE) access technology, a RAN access technology, or the like) defined by the 3GPP standard group, but also supports access to a core network by using a non-3GPP (non-3GPP) access technology by using a non-3GPP interworking function (non-3GPP interworking function, N3IWF) or a next generation access gateway (next generation packet data gateway, ngPDG).

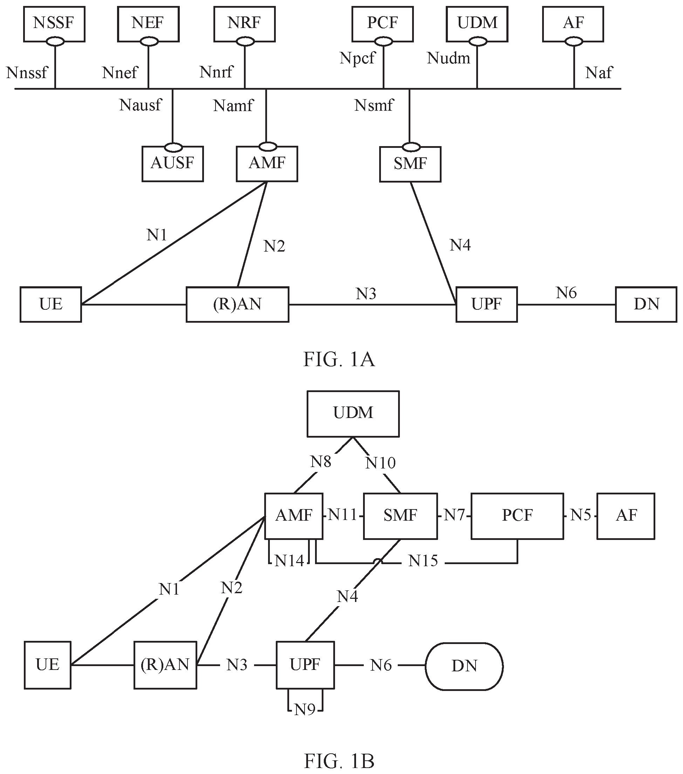

FIG. 1A is a diagram of a network architecture in a non-roaming scenario. In the network architecture, a network slice selection function (network slice selection function, NSSF), a network exposure function (network exposure function, NEF), an NRF, a strategy control function (strategy control function, PCF), unified data management (unified data management, UDM), an application function (application function, AF), an authentication server function (authentication server function, AUSF), an access and mobility management function (access and mobility management function, AMF), and a session management function (session management function, SMF) may communicate with each other in pairs based on a service method. Certainly, for two network elements to communicate, one of the network elements need to expose a corresponding service method to the other network element. In FIG. 1A, Nnssf may be considered as a service interface of the NSSF. Similarly, Nnef is a service interface of the NEF, Npcf is a service interface of the PCF, Nudm is a service interface of the UDM, Naf is a service interface of the AF, Nausf is a service interface of the AUSF, Namf is a service interface of the AMF, and Nsmf is a service interface of the SMF. In addition, the AMF may communicate with a terminal device through an N1 interface, the AMF may communicate with a (R)AN through an N2 interface, the SMF may communicate with a user plane function (user plane function, UPF) through an N4 interface, the terminal device communicates with the (R)AN through an air interface, the (R)AN may communicate with the UPF through an N3 interface, and the UPF may communicate with a data network (data network, DN) through an N6 interface.

The mobility management function network element is, for example, an MME in a 4G system, and is, for example, an AMF in a 5G system. This is not limited in embodiments of this application, and may alternatively be implemented as another network element in another communication system. An example in which the mobility management function network element is the AMF is used. The AMF is mainly responsible for interfacing with a radio network, terminating a radio access network (radio access network, RAN) control plane (control plane, CP) interface, that is, the N2 interface, terminating non-access-stratum (non-access-stratum, NAS) and performing NAS encryption and integrity protection, performing registration management, connection management, reachability management, or mobility management, transmitting a session management (session management, SM) message between user equipment (user equipment, UE) and the SMF, giving a notification about a mobility event of the UE, or providing another function.

The session management function network element is, for example, an SMF in a 5G system, and may alternatively be implemented as another network element in another communication system. An example in which the session management function network element is the SMF is used. The SMF may provide session management functions such as session creation, modification, and release, including a tunnel maintenance function between the UPF and an access network (access network, AN) node, internet protocol (internet protocol, IP) address assignment and management for UE, a dynamic host control protocol (dynamic host control protocol, DHCP), selection and control of a user plane (user plane, UP) function, configuration of a UPF traffic steering function, termination of a strategy control function interface, charging, roaming, a strategy control related function, or the like.

The user plane function network element is, for example, a UPF in a 5G system, and may alternatively be implemented as another network element in another communication system. An example in which the user plane function network element is the UPF is used. The UPF is a user plane data forwarding entity, serves as an external PDU session point for data network interconnection, and has functions such as packet routing and forwarding, packet detection, user plane strategy enforcement, lawful interception, traffic usage reporting, or quality of service (quality of service, QoS) processing.

The network function repository function network element is, for example, an NRF in a 5G system, and may alternatively be implemented as another network element in another communication system. An example in which the network function repository function network element is the NRF is used. The NRF may support functions such as a service discovery function and maintenance of network function (network function, NF) configuration of an available NF instance. In roaming scenarios, NRFs are classified into visit NRFs (visit NRFs, vNRFs) and home NRFs (home NRFs, hNRFs). Based on network implementation, the NRFs are classified into public land mobile network (public land mobile network, PLMN)-level NRFs, shared slice NRFs, and specific slice NRFs. The PLMN-level NRF may be understood such that different PLMNs may use different NRFs. The shared slice NRF may be understood such that different network slices may share one NRF. The specific slice NRF may be understood such that different network slices respectively use different NRFs.

In FIG. 1A, Nnef, Npcf, Nudm, Naf, Namf, Nsmf, N1, N2, N3, N4, and N6 are interface serial numbers. For meanings of the interface serial numbers, refer to meanings defined in the 3GPP standard protocol. This is not limited herein.

FIG. 1B is a diagram of a 5G network architecture based on a point-to-point interface. For description of functions of network elements in the architecture, refer to the descriptions of the functions of the corresponding network elements in FIG. 1A. Details are not described herein again. A main difference between FIG. 1B and FIG. 1A lies in that interfaces between the network elements in FIG. 1B are point-to-point interfaces instead of service-based interfaces.

In the architecture shown in FIG. 1B, an interface between UE and an AMF network element is referred to as an N1 interface, an interface between the AMF network element and a RAN device is referred to as an N2 interface, an interface between the RAN device and a UPF network element is referred to as an N3 interface, an interface between an SMF network element and the UPF network element is referred to as an N4 interface, an interface between a PCF network element and an AF network element is referred to as an N5 interface, an interface between the UPF network element and a DN is referred to as an N6 interface, an interface between the SMF network element and the PCF network element is referred to as an N7 interface, an interface between the AMF network element and a UDM network element is referred to as an N8 interface, an interface between different UPF network elements is referred to as an N9 interface, an interface between the UDM network element and the SMF network element is referred to as an N10 interface, an interface between the AMF network element and the SMF network element is referred to as an N11 interface, an interface between different AMF network elements is referred to as an N14 interface, and an interface between the AMF network element and the PCF network element is referred to as an N15 interface.

It may be understood that the foregoing network elements or functions may be network elements in a hardware device, or may be software functions running on dedicated hardware or virtualized functions instantiated on a platform (for example, a cloud platform). Optionally, the network element or function may be implemented by one device, may be jointly implemented by a plurality of devices, or may be a functional module in one device. This is not specifically limited in embodiments of this application.

In this application, a mobility management network element, a session management network element, a strategy control network element, an application function network element, an access network device, and a network repository network element may be the AMF, the SMF, the PCF, the AF, the RAN, and the NRF in FIG. 1A or FIG. 1B; or may be network elements that have functions of the AMF, the SMF, the PCF, the AF, the RAN, and the NRF in a future communication such as a 6th generation (6th generation, 6G) network. This is not limited in this application. For ease of description, an example in which the mobility management network element, the session management network element, the strategy control network element, the application function network element, the access network device, and the network repository network element are respectively the AMF, the SMF, the PCF, the AF, the RAN, and the NRF is used in this application for description.

For ease of descriptions, in embodiments of this application, a base station (for example, an eNB in 4th (the 4th generation, 4G), a gNB in 5G, or a base station in future communication) is used as an example of the access network device for description, and a "base station" that appears subsequently may be replaced with an "access network device". In embodiments of this application, UE is used as an example of a terminal for description, and "UE" that appears subsequently may be replaced with a "terminal".

It may be understood that the core network may further include another network functional entity. This is not limited in this application.

The technical solutions provided in embodiments of this application may be applied to various communication systems. For example, the technical solutions may be applied to a 5G system, or may be applied to another future-oriented new system, for example, a 6G system. This is not specifically limited in embodiments of this application. In addition, the terms "system" and "network" may be interchangeable with each other.

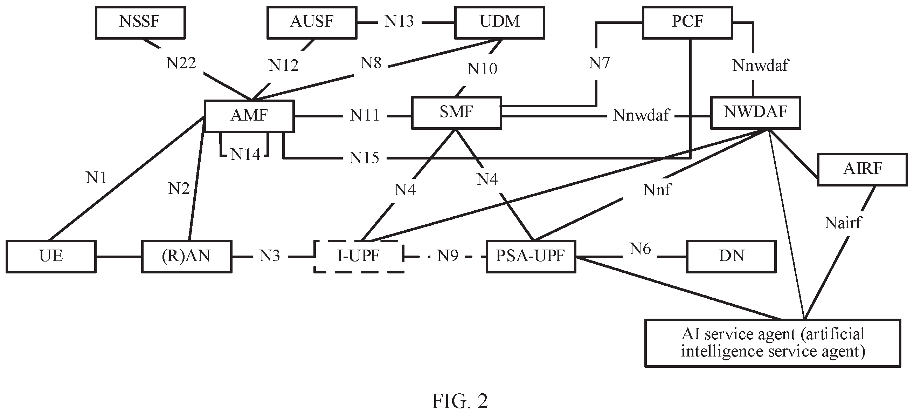

To better adapt to a requirement of artificial intelligence, an artificial intelligence repository service (artificial intelligence repository function, AIRF) and an artificial intelligence service agent (AI Service Agent) are introduced in a service-based architecture provided in this application, as shown in FIG. 2. The AIRF may be co-located with the foregoing NRF network element, or may be deployed independently. This is not specifically limited in this application. The AIRF is mainly configured to receive AI information registration, and provide an AI information query service for another network element. The AIRF may receive information registration from a model training function (model training logical function, MTLF) and a data analysis function (analytics logical function, ANLF) in a network data analytics function (network data analytics function, NWDAF), and may further receive information registration from another network element. This is not specifically limited in this application. During actual application, the AIRF may directly provide the AI information query service for an AI consumer (that is, AI Compute) in the SMF, and may further provide the AI information query service for an AI consumer in the UPF. This is not specifically limited herein. In addition, the UE is usually isolated from the core network, and the UE may receive the AI information query service of the AIRF through the AI service agent. In addition, some network elements that do not support direct interaction with the AIRF can also establish communication connections to the AIRF through the AI service agent to obtain the AI information query service. The service-based architecture provided herein is merely an example for description, and does not constitute a specific limitation on how to specifically dispose the AIRF and the AI service agent. An interface between the NSSF and the AMF network element is referred to as an N22 interface, an interface between the AMF network element and the RAN device is referred to as an N12 interface, an interface between the AIRF and the AI service agent is referred to as an Nairf interface, an interface between a PDU session anchor UPF (packet data unit session anchor UPF, PSA-UPF) and the NWDAF is referred to as an Nnf interface, an interface between the SMF and the NWDAF is referred to as an Nnwdaf interface, an interface between the PCF and the NWDAF is referred to as an Nnwdaf interface, and an interface between an intermediate UPF (intermediate UPF, I-UPF) and the PSA-UPF is an N9 interface.

In terms of standardization, 3GPP SA2 and SA5 have begun and continued work on 5G systemic intelligence and management architectures, and have standardized the definition of the NWDAF, a management data analytics function (management data analytics function, MDAF), and related mechanisms and procedures. For a next generation 5.5G or 6G intelligence plane, there are no clear definitions for an architecture, service procedures, or interaction interfaces for providing, by a network for AI for an end user, an APP, or an AF, an AI service capability or AI computational power constructed by the core network. In other words, there is no appropriate architecture definition, functional decomposition, or message exchange procedures for the AI service capability or AI computational power constructed by the core network for providing a corresponding AI service capability or AI computational power for the end user UE, the application server AF, or another NF. On this basis, this application provides a communication method, to provide intelligent services for devices.

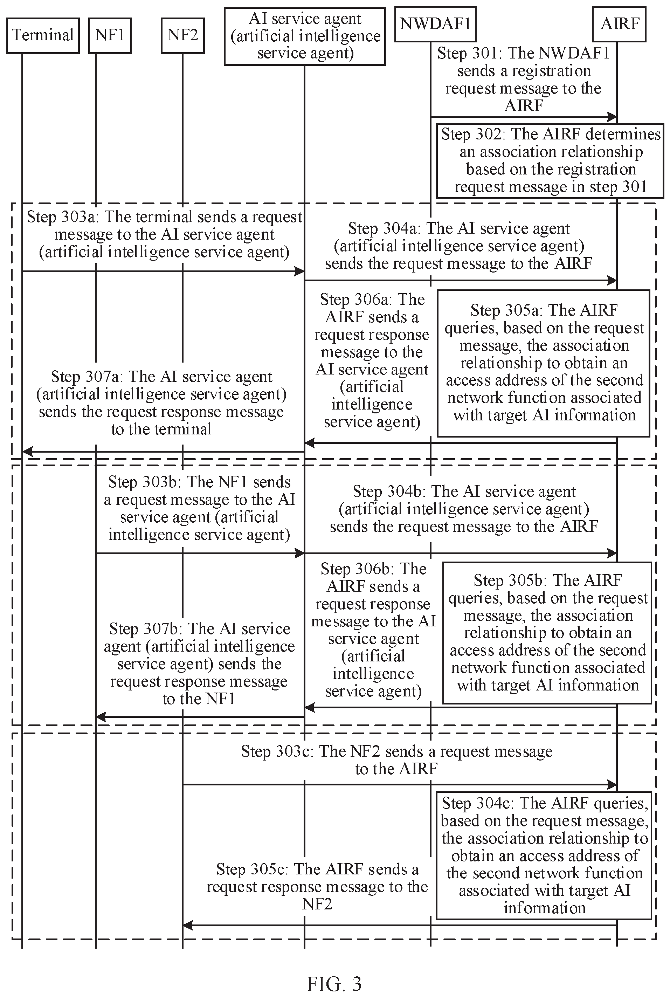

FIG. 3 is a schematic flowchart of a communication method according to this application. The method may be implemented through interaction between a first network function and another network function. This is not limited in this application. AI information of a network element is registered with the first network function. The first network function may be an AIRF, and is specially configured to implement registration of the AI information. Alternatively, the first network function may be a functional entity disposed in an NRF network element, and is configured to implement registration of the AI information. A second network function has a capability of performing AI processing, and can perform an AI service or perform AI computation. This is not specifically limited in this application. The second network function may be an NWDAF, an MDAF, an NF, or the like. This is not specifically limited in this application. A third network function is a terminal or another network element in a core network. This is not specifically limited in this application. A fourth network function is an agent network element, for example, an AI service agent. The fourth network function may be configured to establish a connection bridge between the third network function and the first network function, and may be further configured to perform identity authentication on an identity of the first network function and an identity of the third network function, and perform format conversion on an exchanged message. This is not specifically limited in this application. In FIG. 3, an example in which the third network function is the terminal, an NF1, or an NF2, the fourth network function is the AI service agent, the second network function is an NWDAF1, and the first network function is the AIRF is used for description. The following steps are performed.

Step 301: The NWDAF1 sends a registration request message to the AIRF, where the registration request message indicates at least one piece of AI information supported by the second network function and an access address of a second network function associated with each piece of AI information.

Step 302: The AIRF determines an association relationship based on the registration request message in step 301.

The association relationship indicates at least one piece of AI information supported by at least one second network function and a relationship between the at least one piece of AI information supported by the at least one second network function and the access address of the second network function associated with each piece of AI information. For example, based on AI information 1 and an access address 1 that are carried in the registration request message of the NWDAF1, the AIRF can determine that an association relationship exists between the AI information 1 and the access address 1. If a specific network element subscribes to or queries for the AI information 1, the AIRF may return the access address 1 of the NWDAF1 to the network element.

During actual application, the AIRF may not only receive the registration request message of the AIRF, but also receive a registration request message of another second network function. This is not specifically limited in this application. In other words, the AIRF may receive a registration request message from the at least one second network function. In addition, the second network function may support one or more pieces of AI information. The second network function may register, with the AIRF, all AI information supported by the second network function, or may register only a part of AI information. This is not specifically limited herein. In addition, different second network functions may support same AI information. This is not specifically limited herein.

The AI information includes: an AI service (for example, image classification, image recognition, and audio synthesis, which are merely described as examples herein and do not constitute a specific limitation) and/or AI computational power (where for example, a CPU calculates a feature vector of a neural network model used for AI computation). If the AI information is the AI service, the registration request message includes an identifier (or a name) of the AI service and an access address of a second network function that provides the AI service. The identifier of the AI service may be an ID of the AI service, for example, an ID of an image classification task or an ID of an audio synthesis task. This is merely an example for description herein. The access address of the second network function may be physical address information of the second network function or a fully qualified domain name (fully qualified domain name, FQDN). Because the second network function may include a plurality of processing units, and different processing units are isolated from each other, the access address of the second network function may be a plurality of pieces of address information that meet a condition. When accessing a second network element, another network element may perform access based on a specific physical address, or may perform access based on a specific physical address obtained through FQDN query. In addition, the registration request information further includes one or more of the following: a type of the AI service (for example, cloud photographing, image processing, facial recognition, translation, or chat with ChatGPT), a model type supported by the AI service (for example, a CNN, an RNN, or a random forest), a service object of the AI service (that is, a target object of the AI service), a data format supported by the AI service (where for example, when the AI service is image recognition, the data format is RGB data or YUV data), and a data computing scale of the AI service (where for example, when the AI service is image recognition, the data computing scale is a quantity and a scale of image recognition tasks). The service object of the AI service includes a terminal device type (for example, an internet of things device or a mobile phone), an APP name (for example, instant messaging software or video software), an end user belonging to a preset number range (for example, an end user within an IMSI/MSISD number range), geographical location information (for example, a specific location), slice information (for example, a specific slice through which a service is received), and an access point identifier (for example, a TRP1 through which a service is received). For example, if the identifier of the AI service is AI1, and a service object of the AI1 is an internet of vehicles device located in Shanghai, the AI1 provides an AI service only for the internet of vehicles device in Shanghai. This is merely an example for description herein, and does not constitute a specific limitation on the service object of the AI service.

If the AI information is the AI computational power, the registration request information includes an identifier of the AI computational power and an access address of a second network function that provides the AI computational power. In addition, the registration request information further includes one or more of the following: a computational power type of the AI computational power (for example, a computational power resource that can run an AI task, such as an X86/ARM CPU, an NPU, or a GPU), a computational power specification (for example, a computational power evaluation indicator: TPS or QPS) of the AI computational power, an AI framework type (for example, TensorFlow, Mindspore, or SKlearn) indicated by the AI computational power, an AI model type (for example, a CNN, an RNN, or a random forest) indicated by the AI computational power, and operator information of the AI computational power (for example, vector computing or matrix computing).

In this application, after receiving the AI information registered by the second network function, the first network function may establish an association relationship between the AI information and the access address of the second network function, so that when the third network function requests, from the first network function, the access address of the second network function associated with the AI information, the first network function can query the association relationship for the access address of the second network function that can provide the AI service, and return the access address to the third network function.

In addition, the AI information supported by the second network function may be periodically updated. To ensure better adaptation to an application requirement of a user, the AIRF may send a monitoring message to the second network function. The monitoring message is used for monitoring an operating status of the second network function. Then, the AIRF may receive a monitoring response message of the second network function. Certainly, the AIRF may periodically send the monitoring message to the second network function, for example, send the monitoring message once a day. Certainly, the second network function may also periodically report change information to the AIRF, for example, report, every four hours, AI information that changes relative to that registered by the second network function with the AIRF. Alternatively, the second network function may directly report change information to the AIRF after the supported AI information changes. This is not specifically limited in this application.

In this application, the operating status of the second network function may be understood as a change of the AI information supported by the second network function or an actual operating status of the second network function. This is not specifically limited in this application.

In one case, after the second network function registers a specific piece of AI information with the first network function, the AI information supported by the second network function may change. For example, the second network function is the NWDAF1, the NWDAF1 has registered, with the first network function at first time, AI information for image processing supported by the NWDAF1, and the AI information supported by the NWDAF1 changes at second time (that is, time after the first time), where for example, AI information for audio processing is added. If the first network function sends the monitoring message to the NWDAF1, a change message of the AI information supported by the second network function can be monitored in real time. In this case, registration information stored by the first network function can be adjusted in a timely manner.

In another case, after the second network function registers a specific piece of AI information with the first network function, the actual operating status of the second network function changes. For example, the second network function is the NWDAF1, the NWDAF1 has registered, with the first network function at first time, AI information for image processing supported by the NWDAF1, and the device NWDAF1 fails at second time. If the first network function sends the monitoring message to the NWDAF1, the NWDAF1 can be monitored in real time. If it is determined that the NWDAF1 has failed, it is determined that the NWDAF1 cannot provide an AI service for image processing. In this case, registration information stored by the first network function can be adjusted in a timely manner.

The terminal may obtain, with reference to step 303a to step 307a, the access address of the second network function associated with target AI information (where the target AI information is one of the at least one piece of AI information, and is AI information required by the terminal herein). The NF1 may obtain, with reference to step 303b to step 307b, the access address of the second network function associated with the target AI information. The NF2 may obtain, with reference to step 303c to step 305c, the access address of the second network function associated with the target AI information. Specifically, the following steps are performed.

Step 303a: The terminal sends a request message to the AI service agent, where the request message is used for requesting the access address of the second network function associated with the target AI information.

Step 304a: The AI service agent sends the request message to the AIRF.

Step 305a: The AIRF queries, based on the request message, the association relationship to obtain the access address of the second network function associated with the target AI information.

Step 306a: The AIRF sends a request response message to the AI service agent, where the request response message indicates the access address of the second network function associated with the target AI information.

Step 307a: The AI service agent sends the request response message to the terminal.

In addition, the terminal may further send to-be-processed data to the AI service agent. The AI service agent may further convert the to-be-processed data into a data format corresponding to the AI information required by the terminal, and then send converted data to the access address of the second network function associated with the AI information required by the terminal. In addition, the AI service agent receives a data processing result from the second network function, and then sends the data processing result to the terminal.

Step 303b: The NF1 sends a request message to the AI service agent, where the request message is used for requesting the access address of the second network function associated with the target AI information.

Step 304b: The AI service agent sends the request message to the AIRF.

Step 305b: The AIRF queries, based on the request message, the association relationship to obtain the access address of the second network function associated with the target AI information.

Step 306b: The AIRF sends a request response message to the AI service agent, where the request response message indicates the access address of the second network function associated with the target AI information.

Step 307b: The AI service agent sends the request response message to the NF1.

Step 303c: The NF2 sends a request message to the AIRF.

Step 304c: The AIRF queries, based on the request message, the association relationship to obtain the access address of the second network function associated with the target AI information.

Step 305c: The AIRF sends a request response message to the NF2, where the request response message indicates the access address of the second network function associated with the target AI information.

The request message in step 303a to step 305c may be a subscription request message, or may be a query request message. This is not specifically limited in this application. If the request message is the subscription request message, before the request response message is sent, a subscription success notification message may be sent to the terminal, the NF1, and the NF2, and then the access address of the second network function associated with the at least one piece of AI information is sent. Certainly, during actual application, the third network function may not only subscribe to the access address of the second network function associated with the required AI information, but also subscribe to an access address of a second network function associated with other AI information. Subscription information is not specifically limited herein. During actual application, the third network function may carry reference information, so that the AIRF queries for an access address of a second network function associated with AI information that better adapts to a subscription requirement of the third network function. For example, if the reference information carried by the third network function is an identifier of an AI service, the AIRF may query for an address of a second network function associated with the identifier of the AI service and feed back the address to the third network function. Alternatively, if the third network function carries an identifier of an AI service and an APP name: APP1, the AIRF may query identifiers of AI services for an AI service that supports the APP 1, select an address of a second network function associated with the AI service that supports the APP1, and feed back the address to the third network function. This is merely an example for description, and does not constitute a specific limitation. During actual application, the subscription success notification and the access address of the second network function associated with the at least one piece of AI information are not sent at the same time. For example, the subscription success notification message is sent at first time, and the access address of the second network function associated with the at least one piece of AI information is sent at second time. The first time is before the second time. In addition, the foregoing subscription success notification and the access address of the second network function associated with the at least one piece of AI information may be sent by using same signaling, or may be sent by using different signaling. This is not specifically limited herein. In this application, the subscription request message is used as the request message, and a message format of the subscription request message can be reused. In this way, the message format does not need to be reconstructed, so that data processing complexity can be reduced. In addition, in this application, the query request message is used as the request message, and a message format of the query request message can be reused. In this way, the message format does not need to be reconstructed, so that data processing complexity can be reduced.

In this application, the first network function receives the request message for the access address associated with the target AI information, queries for the corresponding access address, and feeds back the access address to the third network function, so that the third network function can obtain an intelligent service by using the access address. In this way, an AI service can be provided for the third network function.

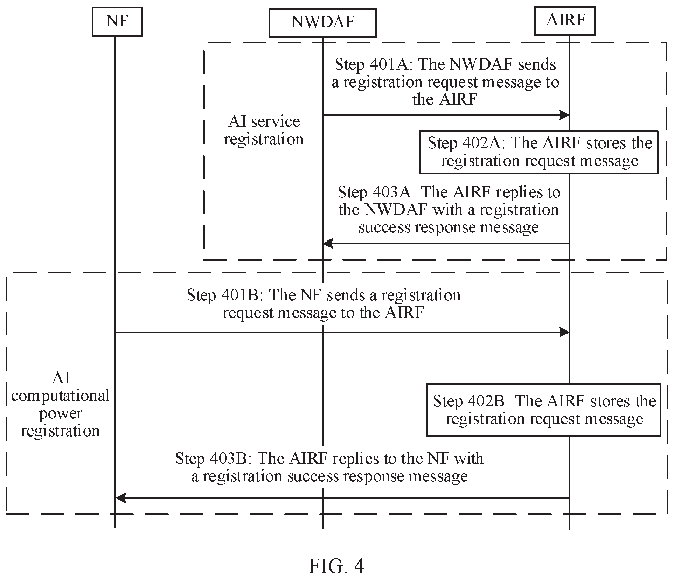

To better describe the solution of this application, the following describes an AI information registration procedure with reference to FIG. 4. The registration procedure may be performed through data exchange between an NWDAF that includes computational power or AI service instances such as an ANLF and an MTLF, an AIRF, and an NF that can provide AI computational power (for example, an AI computational power resource generated by an NF such as a UPF or an SMF or independently deployed AI computational power). The following steps are performed.

The following describes an AI service registration procedure by using step 401A to step 403A, and the following describes an AI computational power registration procedure by using step 401B to step 403B.

Step 401A: The NWDAF sends a registration request message to the AIRF.

The registration request message may be sent by using Nairf_AIManage_AIServiceRegister_Request (an artificial intelligence repository service request, an artificial intelligence management request, or an artificial intelligence service registration request), and may carry an identifier of an AI service, an instance that provides the AI service (that is, an access address of the NWDAF), a type of the AI service, a model type supported by the AI service, a service object of the AI service, a data format supported by the AI service, and a data computing scale of the AI service. Reference may be made to the foregoing descriptions for understanding, and details are not described herein again. Unless otherwise specified, the instances and an access address of a second network function in this application can be replaced with each other.

Step 402A: The AIRF stores the registration request message.

Step 403A: The AIRF replies a registration success response message to the NWDAF.

The registration success response message may be sent by using Nairf_AIManage_AIServiceRegister_Response (an artificial intelligence repository service request response, an artificial intelligence management request response, or an artificial intelligence service registration response). An AI service that has been registered may provide query and subscription capabilities of an instance of the AI service for an AI service consumer. Carried key query information may be an AI service ID or name, or the like. Another NF that can provide an AI service capability (for example, an AI service generated by the NF such as the UPF or the SMF or an independent AI service) may also perform the AI service registration procedure by using Nairf_AIManage_AIServiceRegister_Request. Details are not described herein.

Step 401B: The NF sends a registration request message to the AIRF.

The registration request message may be sent by using Nairf_AIManage_AIServiceRegister_Request, and may carry an identifier of the AI computational power, an instance that provides the AI computational power (that is, a logical address of the NF), a computational power type of the AI computational power, a computational power specification of the AI computational power, an AI framework type indicated by the AI computational power, an AI model type indicated by the AI computational power, and operator information of the AI computational power. Reference may be made to the foregoing descriptions for understanding, and details are not described herein again.

Step 402B: The AIRF stores the registration request message.

Step 403B: The AIRF replies a registration success response message to the NF.

The registration success response message may be sent by using Nairf_AIManage_AIServiceRegister_Response. AI computational power that has been registered may provide query and subscription capabilities of an instance of the AI computational power for an AI computational power consumer. Carried key query information of an AI compute resource type, the AI framework type, the AI model type, and an operator capability.

The AIRF can actively initiate a heartbeat message (that is, the foregoing monitoring message) to an NF (or an NWDAF) on which the AI service or the AI computational power has been registered, to sense a status of the NF (or the NWDAF). In addition, the NF on which the AI service or the AI computational power has been registered may update the status of the NF (or the NWDAF) by updating registration information. The AIRF can provide an Nairf_AIManage_AIServiceDiscovery Request/Response message for a consumer to provide a discovery capability of the AI service instance. In addition, the AIRF can provide an Nairf_AIManage_AIComputeResouceDiscovery Request/Response message for the consumer to provide a discovery capability of the AI computational power instance.

In addition, in addition to providing the discovery capabilities of the AI service instance and the AI computational power instance, the AIRF can further provide Nairf_AIManage_AIServiceStatusSubscribe/Nairf_AIManage_AIServiceStatusNotify (an artificial intelligence repository service notification, an artificial intelligence management notification, an artificial intelligence service status subscription notification, an artificial intelligence repository service notification, an artificial intelligence management notification, or an artificial intelligence service status notification) and Nairf_AIManage_AIComputeStatusSubscribe/Nairf_AIManage_AIComputeStatusNotify (an artificial intelligence repository service notification, an artificial intelligence management notification, an artificial intelligence computational power status subscription notification, an artificial intelligence repository service notification, an artificial intelligence management notification, or an artificial intelligence computational power status notification) for the AI service consumer or the AI computational power consumer.

The AIRF provides AI service or computational power registration and discovery with a framework, including AI service and computational power registration, AI service or AI computational power instance status monitoring, AI service or AI computational power instance discovery, and AI service or AI computational power status subscription procedure. The framework provides a basis for UE, an AF, or another NF, which is considered as a consumer, to discover and use the AI service or computational power of a core network.

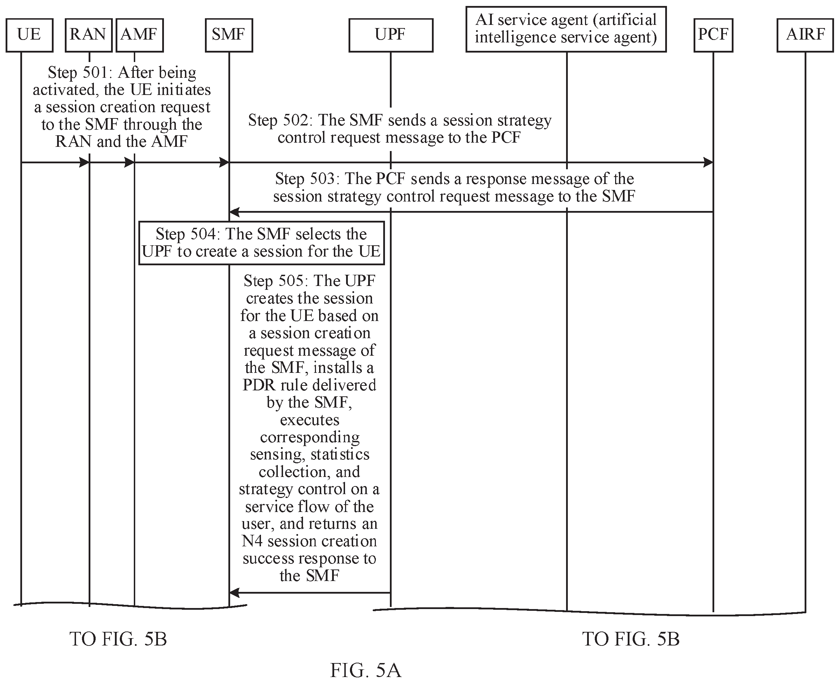

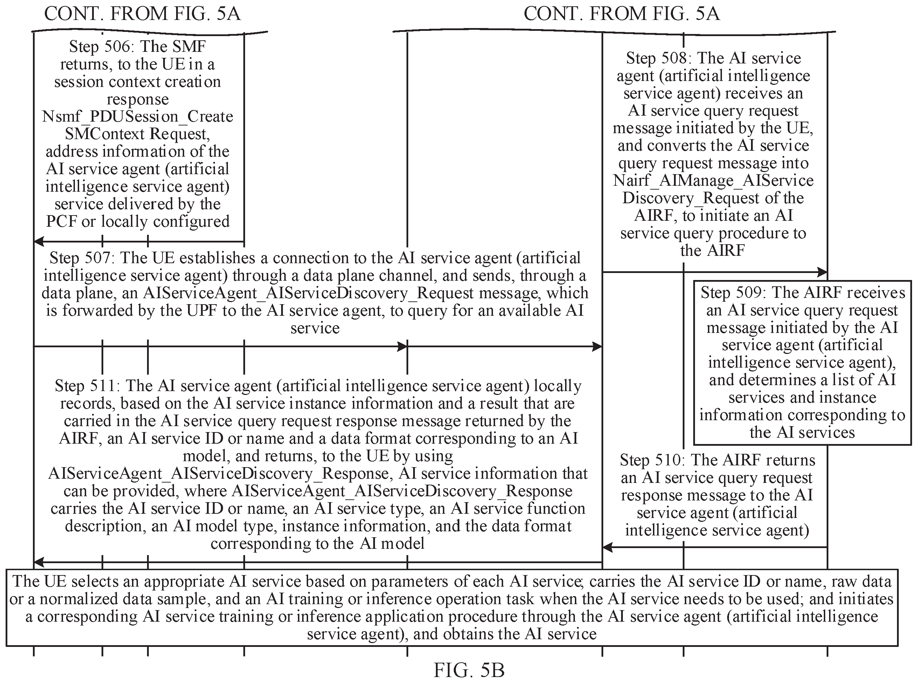

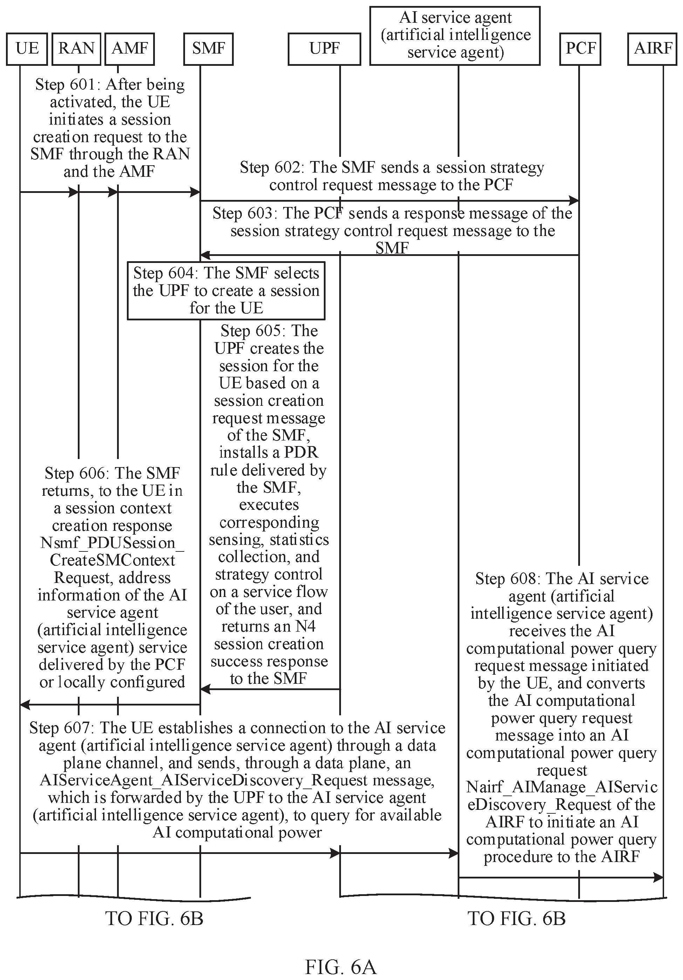

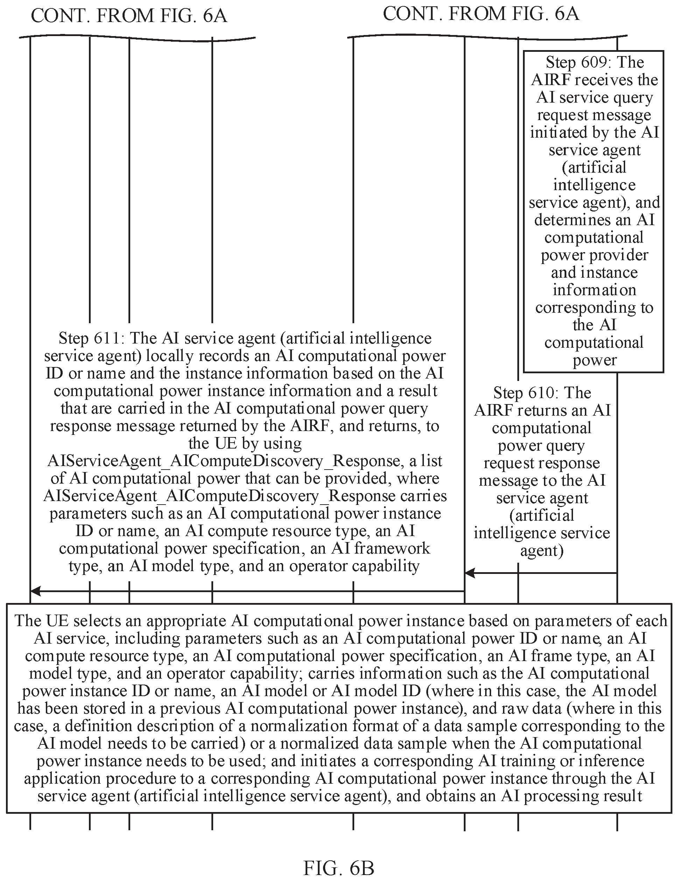

The following describes, with reference to FIG. 5A to FIG. 6B, how UE uses an AI service and AI computational power. For a case in which the UE uses the AI service, a method may be performed with reference to FIG. 5A and FIG. 5B. For a case in which the UE uses the AI computational power, the method may be performed with reference to FIG. 6A and FIG. 6B. The method may be performed through data exchange between the UE, a RAN, an AMF, an SMF, an AI service agent, a UPF, an AIRF, and a PCF. The UE interacts with the AI service agent through a user plane, to query for and use a network AI service capability.

### Case 1: The UE uses the AI service.

The following steps are performed with reference to FIG. 5A and FIG. 5B.

Step 501: After being activated, the UE initiates a session creation request to the SMF through the RAN and the AMF.

Step 502: The SMF sends a session strategy control request message to the PCF.

The session strategy control request message may be sent by using Npcf_SMStrategyControl_Create Request, and is used for obtaining subscription information of a subscribed user, such as a control strategy and a charging rule. In addition, the subscription information may further include address information of an AI service agent service.

Step 503: The PCF sends a response message of the session strategy control request message to the SMF.

The response message may be returned to the SMF by using an Npcf_SMStrategyControl_Create Response message. If the subscription information includes the address information of the AI service agent service, the AMF may record the address information of the AI service agent service, and may further locally configure the address information of the AI service agent service. For example, the AMF configures the address information of the AI service agent on the SMF or the AMF by using a configuration command or file, and includes the address information in a corresponding message. The address information does not need to be sequentially transferred from the PCF to the UE in a path of the PCF->the SMF->the AMF->the RAN->the UE. This is not specifically limited in this application.

Step 504: The SMF selects the UPF to create a session for the UE.

Step 505: The UPF creates the session for the UE based on a session creation request message of the SMF, installs a PDR rule (packet detection rule) delivered by the SMF, executes corresponding sensing, statistics collection, and strategy control on a service flow of the user, and returns an N4 session creation success response to the SMF.

Step 506: The SMF returns, to the UE in a session context creation response Nsmf_PDUSession_CreateSMContext Request, the address information of the AI service agent service delivered by the PCF or locally configured.

After receiving the address information of the AI service agent service delivered by the SMF during session creation, the UE can interact with the AI service agent through a data plane channel of the session, and query for and use the AI service provided by a core network. Herein, the UE may alternatively configure the address information of the AI service agent service. For example, the address information of the AI service agent is directly configured on a terminal side by setting an interface.

Step 507: The UE establishes a connection to the AI service agent through the data plane channel, and sends, through a data plane, an AIServiceAgent_AIServiceDiscovery_Request message, which is forwarded by the UPF to the AI service agent, to query for an available AI service.

The UE in step 507 may invoke, by using a specific APP, a channel and a data interface that are provided by the UE. The AIServiceAgent_AIServiceDiscovery_Request message is a query request message or a subscription message (where the query request message is used as an example for description below), and may carry some condition parameters (for example, parameters such as a globally defined AI service ID or name, an AI service type, and an APP name) of an AI service required by the terminal, so that the core network selects an AI service that the terminal concerns and provides the AI service for the UE to use. In addition, during actual application, the AI service agent may be further co-located with the UPF. This is not specifically limited herein.

Step 508: The AI service agent receives an AI service query request message initiated by the UE, and converts the AI service query request message into Nairf_AIManage_AIServiceDiscovery_Request of the AIRF, to initiate an AI service query procedure to the AIRF.

Step 509: The AIRF receives an AI service query request message initiated by the AI service agent, and determines a list of AI services and instance information corresponding to the AI services.

Specifically, the AIRF may perform matching with registration information of each AI service based on information such as the condition parameters of the AI service and attribute parameters (for example, an IMSI, an MSISDN, a terminal type, and an APP name or ID) of a consumer terminal (that is, the UE) that are carried in the query request message, and feed back, to the AI service agent, a list of available AI services that meet conditions of an AI service provider and consumer and instance information of the AI services.

Step 510: The AIRF returns an AI service query request response message to the AI service agent.

The query request response message may be sent by using Nairf_AIManage_AIServiceDiscovery_Response, and parameters that may be carried include: the AI service ID or name, the AI service type, an AI service function description, an AI model type, instance information (an address or a fully qualified domain name fully qualified domain name for providing the AI service), and a data format corresponding to an AI model.

Step 511: The AI service agent locally records, based on the AI service instance information and a result that are carried in the AI service query request response message returned by the AIRF, the AI service ID or name and the data format corresponding to the AI model, and returns, to the UE by using AIServiceAgent_AIServiceDiscovery_Response, AI service information that can be provided, where AIServiceAgent_AIServiceDiscovery_Response carries the AI service ID or name, the AI service type, the AI service function description, the AI model type, the instance information, and the data format corresponding to the AI model.

The data format corresponding to the AI model may be specifically defined in the following json file. For example, relationship pairs of hierarchical domain names and domain values are used to describe data items required by the model and a relationship between each data item and raw data, including feature engineering (including computation processing such as summation, averaging, variance, weighting, and matrix operation) to be performed based on the raw data.

```
          {
           "MosModel":"ShortVideo",//Short video
           "KQI": [//Key quality indicator
               "S_QUALITY", //Service quality attribute
               "S_INTERACTION", //Service interaction attribute
               "S_COMPLETENESS" //Service completeness attribute
           ],
           "KQI Models": {//Key quality indicator evaluation model
               "S_INTERACTION": [//Service interaction attribute evaluation model
                  "ShortVideoInteractionModel" //Short video interaction evaluation model
               ],
               "S_COMPLETENESS": [//Service completeness evaluation model
                  "ShortVideoStall" //Short video stalling evaluation model
               ]
           },
           "model path": {//Model storage path
               "ShortVideoStall": "./models/stall_shortvideo_classify_model.cml" //Path and
 file name of the short video stalling model
           },
           "Required features": {//Required features
               "S_QUALITY": "AVG_DOWNLOAD_SPEED", //Service quality attribute:
               Average download speed
               "S_INTERACTION": {//Service interaction attribute
                  "ShortVideoInteractionModel": [ //Short video interaction model
                      "BUFFER_VIDEO_HEADER" //Video buffer header
                  ]
               },
               "S_COMPLETENESS": {//Service completeness interaction attribute
                  "ShortVideoStall": [//Short video stalling indicator
                      "ANALYSIS_FEATURE", //Analysis feature
                      "SPEED_SEQ_FEATURE" //Speed sequence feature
           },
           "config": {
               "update interval": 5.0 //Update interval: 5 seconds
          }
```

The UE receives the available AI service returned by the AI service agent; selects an appropriate AI service based on parameters of each AI service; carries the AI service ID or name, the raw data or a normalized data sample, and an AI training or inference operation task when the AI service needs to be used; and initiates a corresponding AI service training or inference application procedure through the AI service agent, and obtains the AI service.

Specifically, if the UE wants to train, based on local data and a specific AI service provided by the core network, an AI model that meets indicator requirements on precision, robustness, and the like, the UE selects an available AI service based on AI service information returned by the core network (that is, the AIRF), and initiates an AI service training request message to the AI service agent by using an AIServiceAgent_AIServiceTrain_Request message. Information carried in the AI service training request message includes: an AI service ID or name, an AI training task ID, raw data or a normalized data sample, an AI training operation code, and specification parameters of a training task (for example, a minimum quantity of samples for training startup, training start time, training duration, a quantity of training iterations, and indicator requirements on training precision, accuracy, and a recall rate for successful training). The AI service agent receives the AI service training request message initiated by the UE, finds address information of the corresponding AI service based on the AI service ID or name carried in the training request message, and then performs, based on a data format of the AI service, feature engineering processing on the raw data carried in the message of the UE, or verifies a data sample obtained by performing feature engineering processing on the raw data. After the data sample is processed, Nnwdaf_AIManage_AIServiceTrain_Request is initiated to a corresponding AI service instance (where an NWDAF may be replaced by another NF to provide the AI service), and carries the AI service ID or name, the AI training task ID, the normalized data sample, and the specification parameters of the training task. The AI service instance provided by the NWDAF or the another NF receives the AI training request initiated by the AI service agent, allocates corresponding training resources based on the AI service ID or name carried in the AI training request, verifies the data sample (where if the AI service agent is co-located with the AI service, data normalization and verification may be combined), and then starts the training task at an appropriate occasion based on the specification parameters of the training task. After the training task is completed and a specification parameter requirement is met, a trained AI model is returned to the AI service agent by using Nnwdaf_AIManage_AIServiceTrain_Response (the trained model may be stored in the AI service instance, an AI model ID is allocated and returned to the UE, and then the UE may start the training or inference task based on the ID). (If a plurality of attempts to start the training task still fails to meet the specification requirement, a training failure result may be returned to the AI service agent).

The AI service agent receives a training complete response message returned by the AI service instance provided by the NWDAF or the another NF. The training complete response message carries the AI service ID or name, the AI training task ID, and a training result code. If the training successes, a trained AI model file or the allocated AI model ID may be synchronously carried (certainly, the trained AI model may be transferred to the terminal side through the AI service agent by using an independent message). The UE determines, based on the AI service ID or name, the AI training task ID, the training result code, and the AI model or AI model ID that are carried in the received training complete response message, to continue training or inference based on the AI model (the inference task may be performed locally or by using the AI service instance).

Specifically, if the UE wants to infer a result based on local data and a specific AI service provided by the core network, the UE selects an available AI service based on AI service information (an AI service ID or name (mandatory), an AI service type, a function description, an AI model type, and a definition description of a normalization format of a data sample corresponding to the AI model) returned by the core network, and initiates an AI service inference request message to the AI service agent by using an AIServiceAgent_AIServiceInference_Request message. Information carried in the AI service inference request message includes: the AI service ID or name, an AI inference task ID, raw data or normalized data sample, an AI inference operation code, and specification parameters of an inference task (for example, a quantity of batch samples for inference startup, inference start time, and a confidence evaluation result requirement for an inference result). The AI service agent receives the AI service inference request message initiated by the UE, finds address information of the corresponding AI service based on the AI service ID or name carried in the inference request message, and then performs, based on a data format of the AI service, feature engineering processing on the raw data carried in the message of the UE, or verifies a data sample obtained by performing feature engineering processing on the raw data. After the data sample is processed, Nnwdaf_AIManage_AIServiceInference_Request is initiated to the corresponding AI service instance (where an NWDAF may be replaced by another NF to provide the AI service), and carries the AI service ID or name, the AI inference task ID, the normalized data sample and an ID of the data sample (where the ID is allocated herein to associate with the inference result), and the specification parameters of the inference task. The AI service instance provided by the NWDAF or the another NF receives the AI inference request initiated by the AI service agent, allocates corresponding inference resources based on the AI service ID or name carried in the AI inference request, verifies the data sample (where if the AI service agent is co-located with the AI service, data normalization and verification may be combined), and then starts the inference task at an appropriate occasion based on the specification parameters of the inference task. After the inference task is completed and a specification parameter requirement is met, the AI inference task ID and the inference result corresponding to each sample ID are returned to the AI service agent by using Nnwdaf_AIManage_AIServiceInference_Response (If a plurality of attempts to start the inference task still fails to meet the specification requirement, an inference failure result of a specific sample ID may be returned to the AI service agent, and each message may carry a plurality of sample IDs and inference results corresponding to the sample IDs).

The AI service agent receives an inference complete response message returned by the AI service instance provided by the NWDAF or the another NF. The inference complete response message carries the AI service ID or name, the AI inference task ID, and the inference result corresponding to each sample ID, and is returned to the UE. The UE performs subsequent processing based on the AI service ID or name, the AI inference task ID, and the inference result corresponding to each sample ID that are carried in the received inference complete response message, to complete an interaction procedure of the AI service inference task.

In this way, the UE may implement, through the AI service agent, functions such as discovery of an AI service deployed on the core network, execution of AI training and inference tasks, processing and normalization of raw data, obtaining of a training result and a model of the AI service, and obtaining of an inference result of each piece of data, so that local intelligent data processing is implemented by using the AI service deployed on the core network.

### Case 2: The UE uses the AI computational power.

Step 601: After being activated, the UE initiates a session creation request to the SMF through the RAN and the AMF.

Step 602: The SMF sends a session strategy control request message to the PCF.

Step 603: The PCF sends a response message of the session strategy control request message to the SMF.

Step 604: The SMF selects the UPF to create a session for the UE.

Step 605: The UPF creates the session for the UE based on a session creation request message of the SMF, installs a PDR rule (packet detection rule) delivered by the SMF, executes corresponding sensing, statistics collection, and strategy control on a service flow of the user, and returns an N4 session creation success response to the SMF.

For understanding of step 601 to step 605, refer to step 501 to step 505 in FIG. 5A. Details are not described herein again.

Step 606: The SMF returns, to the UE in a session context creation response Nsmf_PDUSession_CreateSMContext Request, the address information of the AI service agent service delivered by the PCF or locally configured

After receiving the address information of the AI service agent service delivered by the SMF during session creation, the UE can interact with the AI service agent service through a data plane channel of the session, and query for and use the AI computational power provided by a core network. Herein, the UE may alternatively configure the address information of the AI service agent service.

Step 607: The UE establishes a connection to the AI service agent through the data plane channel, and sends, through a data plane, an AIServiceAgent_AIServiceDiscovery_Request message, which is forwarded by the UPF to the AI service agent, to query for available AI computational power.

The AIServiceAgent_AIServiceDiscovery_Request message is a query request message or a subscription message (where the query request message is used as an example for description below), and may carry some condition parameters of AI computational power required by the terminal (for example, an AI compute resource type (a computational power resource that can run an AI task, such as an X86/ARM CPU, an NPU, or a GPU), an AI computational power specification, an AI framework type (for example, TensorFlow, Mindspore, or SKlearn), an AI model type (for example, a CNN, an RNN, or a random forest), and an operator capability (for example, vector computing or matrix computing)), so that the core network selects the AI computational power required by the terminal and provides the AI computational power for the UE to use.

Step 608: The AI service agent receives an AI computational power query request message initiated by the UE, and converts the AI computational power query request message into an AI computational power query request Nairf_AIManage_AIServiceDiscovery_Request of the AIRF, to initiate an AI computational power query procedure to the AIRF.

Step 609: The AIRF receives the AI service query request message initiated by the AI service agent, and determines an AI computational power provider and instance information corresponding to the AI computational power.

Specifically, the AIRF performs matching with registration information of each AI computational power instance based on information such as the condition parameters of the AI computational power, parameters such as the AI computational power specification, the AI framework type, the AI model type, and the operator capability that are carried in the query request message, and provides, for the AI service agent, available AI computational power that meets conditions of an AI computational power provider and consumer and instance information of the available AI computational power.

Step 610: The AIRF returns an AI computational power query request response message to the AI service agent.

The query request response message may be sent by using Nairf_AIManage_AIServiceDiscovery_Response, and parameters that may be carried include: the AI computational power ID or name, the AI compute resource type, the AI computational power specification, the AI framework type, the AI model type, the operator capability (for example, parameters such as vector computing or matrix computing), and instance information.

Step 611: The AI service agent locally records, based on the AI computational power instance information and a result that are carried in the AI computational power query response message returned by the AIRF, the AI computational power ID or name and the instance information, and returns, to the UE by using AIServiceAgent_AIComputeDiscovery_Response, a list of AI computational power that can be provided, where AIServiceAgent_AIComputeDiscovery_Response carries parameters such as the AI computational power instance ID or name, the AI compute resource type, the AI computational power specification, the AI framework type, the AI model type, and the operator capability.

The UE receives a list of available AI computational power returned by the AI service agent; selects an appropriate AI computational power instance based on parameters of each AI service, including parameters such as an AI computational power ID or name, an AI compute resource type, an AI computational power specification, an AI framework type, an AI model type, and an operator capability; carries information such as the AI computational power instance ID or name, an AI model or AI model ID (where in this case, the AI model has been stored in a previous AI computational power instance), and raw data (where in this case, a definition description of a normalization format of a data sample corresponding to the AI model needs to be carried) or a normalized data sample when the AI computational power instance needs to be used; and initiates a corresponding AI training or inference application procedure to the corresponding AI computational power instance through the AI service agent, and obtains an AI processing result.

Specifically, if the UE wants to train, based on an initial model, local data, and a specific AI computational power instance provided by the core network, an AI model that meets indicator requirements on precision, robustness, and the like, the UE selects an available AI computational power instance based on AI computational power instance information (parameters such as an AI computational power ID or name, an AI compute resource type, an AI computational power specification, an AI framework type, an AI model type, and an operator capability) returned by the core network, and initiates an AI computational power training request message to the AI service agent by using an AIServiceAgent_AIComputeTrain_Request message. Information carried in the AI computational power training request message includes: the AI computational power instance ID or name, an AI training task ID, the AI model or AI model ID, raw data or a normalized data sample, an AI training operation code, and specification parameters of a training task (for example, a minimum quantity of samples for training startup, training start time, training duration, a quantity of training iterations, indicator requirements on training precision, accuracy, and a recall rate for successful training).

The AI service agent receives the AI service training request message initiated by the UE, finds address information of the corresponding AI service based on the AI service ID or name carried in the training request message, and then performs, based on a definition description of a normalization format of the data sample of the AI service, feature engineering processing on the raw data carried in the message of the UE, or verifies a data sample obtained by performing feature engineering processing on the raw data. After the data sample is processed, AIManage_AIServiceTrain_Request is initiated to the corresponding AI service instance (where an NWDAF may be replaced by another NF to provide the AI service), and carries information such as the AI computational power instance ID or name, the AI model or AI model ID (where in this case, the AI model has been stored in a previous AI computational power instance), the AI training task ID, the raw data (where in this case, the definition description of the normalization format of the data sample corresponding to the AI model needs to be carried) or the normalized data sample, and the specification parameters of the training task, to initiate the training task to the corresponding AI computational power instance.

The AI compute instance provided by the NWDAF or the another NF receives the AI training request initiated by the AI service agent, allocates corresponding training resources based on the AI computational power ID or name carried in the AI training request, verifies the data sample (where if the AI service agent is co-located with the AI service, data normalization and verification may be combined), and then starts the training task at an appropriate occasion based on the AI model or AI model ID, the AI training task ID, and the specification parameters of the training task that are specified by the training task. After the training task is completed and a specification parameter requirement is met, a trained AI model is returned to the AI service agent by using AIManage_AIServiceTrain_Response (the trained model may be stored in the AI compute instance, an AI model ID is allocated and returned to the UE, and then the UE may start the training or inference task based on the ID) (If a plurality of attempts to start the training task still fails to meet the specification requirement, a training failure result may be returned to the AI service agent). The AI service agent receives a training complete response message returned by the AI compute instance provided by the NWDAF or the another NF. The training complete response message carries the AI service ID or name, the AI training task ID, and a training result code. If the training successes, a trained AI model file or the allocated AI model ID may be synchronously carried (certainly, the trained AI model may be transferred to the terminal side through the AI service agent by using an independent message). The UE determines, based on the AI service ID or name, the AI model ID or training task ID, the training result code, and the AI model or AI model ID that are carried in the received training complete response message, to subsequently continue training or inference based on the AI model (the inference task may be performed locally or by using the AI service instance).

Specifically, if the UE wants to infer a result based on local data and a specific AI computational power instance provided by the core network, the UE selects an available AI computational power instance based on AI computational power instance information (parameters such as an AI computational power ID or name, an AI compute resource type, an AI computational power specification, an AI framework type, an AI model type, and an operator capability) returned by the core network, and initiates an AI service inference request message to the AI service agent by using an AIServiceAgent_AIComputeInference_Request message. Information carried in the AI service inference request message includes: an AI computational power instance ID or name, an AI model or AI model ID, an AI inference task ID, raw data (where if the data is sent for the 1^{st} time, information about a definition description of a normalization format of a data sample needs to be carried) or a normalized data sample, an AI inference operation code, and specification parameters of an inference task (for example, a quantity of batch samples for inference startup, inference start time, and a confidence evaluation result requirement for an inference result).

The AI service agent receives the AI computational power inference request message initiated by the UE, finds address information of the corresponding AI service based on the AI computational power instance ID or name carried in the inference request message, and then performs, based on the definition description of the normalization format of the data sample of the AI model corresponding to the AI inference task, feature engineering processing on the raw data carried in the message of the UE, or verifies a data sample obtained by performing feature engineering processing on the raw data. After the data sample is processed, AIManage_AIComputeInference_Request is initiated to the corresponding AI compute instance (where an NWDAF may be replaced by another NF to provide the AI service), and carries the AI computational power instance ID or name, the AI inference task ID, the normalized data sample and an ID of the data sample (where the ID is allocated herein to associate with the inference result), and the specification parameters of the inference task (for example, the quantity of batch samples for inference startup, the inference start time, and the confidence evaluation result requirement for the inference result). The AI compute instance provided by the NWDAF or the another NF receives the AI inference request initiated by the AI service agent, allocates corresponding inference resources based on the AI computational power instance ID or name carried in the AI inference request, verifies the data sample (where if the AI service agent is co-located with the AI service, data normalization and verification may be combined), and then starts the inference task at an appropriate occasion based on the AI model and inference specification parameters (for example, the quantity of batch samples for inference startup, the inference start time, and the confidence evaluation result requirement for the inference result) of the inference task. After the inference task is completed and a specification parameter requirement is met, the AI inference task ID and the inference result corresponding to each sample ID are returned to the AI service agent by using AIManage_AIServiceInference_Response (If a plurality of attempts to start the inference task still fails to meet the specification requirement, an inference failure result of a specific sample ID may be returned to the AI service agent, and each message may carry a plurality of sample IDs and inference results corresponding to the sample IDs).

The AI service agent receives an inference complete response message returned by the AI compute instance provided by the NWDAF or the another NF. The inference complete response message carries the AI computational power instance ID or name, the AI model ID, the AI inference task ID, and the inference result corresponding to each sample ID, and is returned to the UE. The UE performs subsequent processing based on the AI computational power instance ID or name, the AI inference task ID, the AI model ID or inference task ID, and the inference result corresponding to each sample ID that are carried in the received inference complete response message, to complete an interaction procedure of the AI service inference task.

In this way, the UE may implement, through the AI service agent, functions such as discovery of an AI computational power deployed on the core network, execution of AI training and inference tasks, processing and normalization of raw data, obtaining of a training result and a model of the AI service, and obtaining of an inference result of each piece of data, so that local intelligent data processing is implemented by using the AI service deployed on the core network.

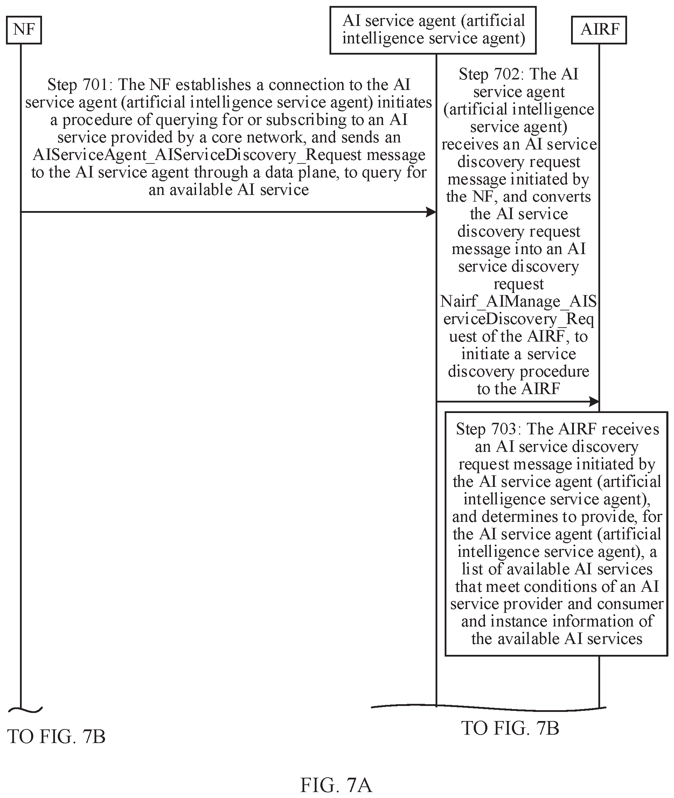

The following describes, with reference to FIG. 7A to FIG. 10, how an AF/NEF/NF uses an AI service and AI computational power, and the method may be performed through data exchange between the NF, an AI service agent, a UPF, and an AIRF. During actual application, there are two different implementations: using the AI service and the AI computational power through the AI service agent, and directly using the AI service and the AI computational power. Specifically, the implementations are as follows.

### Manner 1: The AF/NEF/NF uses the AI service and the AI computational power through the AI service agent.

### Case 1: The AF/NEF/NF uses the AI service.

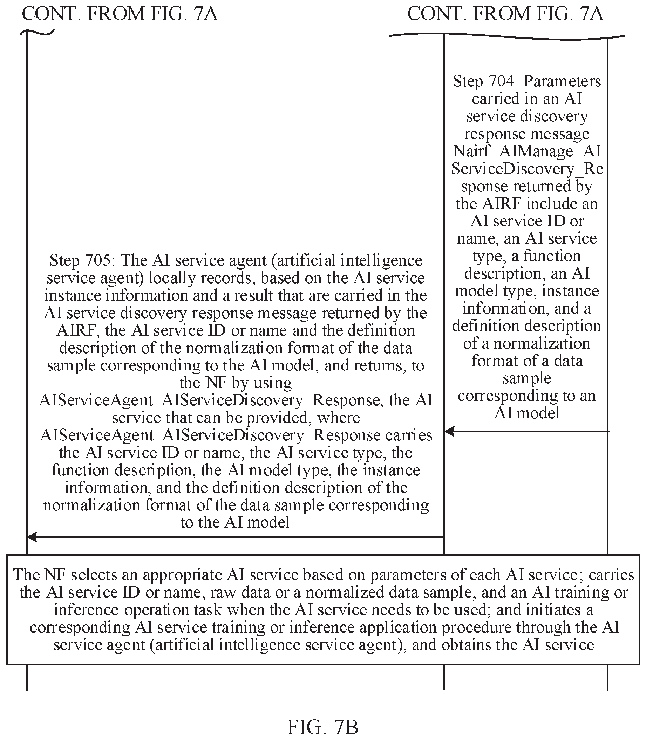

Herein, the NF is used as an example for description. The following steps are performed with reference to FIG. 7A and FIG. 7B.

Step 701: The NF establishes a connection to the AI service agent initiates a procedure of querying for or subscribing to the AI service provided by a core network, and sends an AIServiceAgent_AIServiceDiscovery_Request message to the AI service agent through a data plane, to query for an available AI service.

The query message may carry some condition parameters (for example, parameters such as a globally defined AI service ID or name, an AI service type, and an APP name or ID) of an AI service required by the NF, so that the core network selects an AI service that the terminal concerns and provides the AI service for the AF/NEF or another NF to use.

Step 702: The AI service agent receives an AI service discovery request message initiated by the NF, and converts the AI service discovery request message into an AI service discovery request message Nairf_AIManage_AIServiceDiscovery_Request of the AIRF, to initiate a service discovery procedure to the AIRF.

The service discovery request message carries a condition parameter of an AI service required by the AF/NEF or the another NF, and an attribute parameter (for example, an APP name or ID) of the NF.

Step 703: The AIRF receives an AI service discovery request message initiated by the AI service agent, performs matching with registration information of each AI service based on information such as the condition parameters of the AI service and the attribute parameters of the NF that are carried in the AI service discovery request message, and determines to provide, for the AI service agent, a list of available AI services that meet conditions of an AI service provider and consumer and instance information of the available AI services.

Step 704: Parameters carried in the AI service discovery response message Nairf_AIManage_AIServiceDiscovery_Response returned by the AIRF include the AI service ID or name, the AI service type, a function description, an AI model type, instance information (an address or a fully qualified domain name fully qualified domain name for providing the AI service), and a definition description of a normalization format of a data sample corresponding to an AI model.

Step 705: The AI service agent locally records, based on the AI service instance information and a result that are carried in the AI service discovery response message returned by the AIRF, the AI service ID or name and the definition description of the normalization format of the data sample corresponding to the AI model, and returns, to the AF/NEF or the another NF by using AIServiceAgent_AIServiceDiscovery_Response, the AI service that can be provided, where AIServiceAgent_AIServiceDiscovery_Response carries the AI service ID or name, the AI service type, the function description, the AI model type, the instance information, and the definition description of the normalization format of the data sample corresponding to the AI model.

The NF receives the available AI service returned by the AI service agent; selects an appropriate AI service based on the parameters of each AI service; carries the AI service ID or name, raw data or a normalized data sample, and an AI training or inference operation task when the AI service needs to be used; and executes a corresponding AI service training or inference procedure through the AI service agent, and obtains the AI service.

Specifically, the NF may obtain the AI training model and a processing result with reference to the foregoing procedure in which the UE uses the AI service in FIG. 5A and FIG. 5B. Details are not described herein again.

In this way, the AF/NEF or the another NF may implement, through the AI service agent, functions such as discovery of an AI service deployed on the core network, execution of AI training and inference tasks, processing and normalization of raw data, obtaining of a training result and a model of the AI service, and obtaining of an inference result of each piece of data, so that local intelligent data processing is implemented through the AI service deployed on the core network.

### Case 2: The AF/NEF/NF uses the AI computational power.

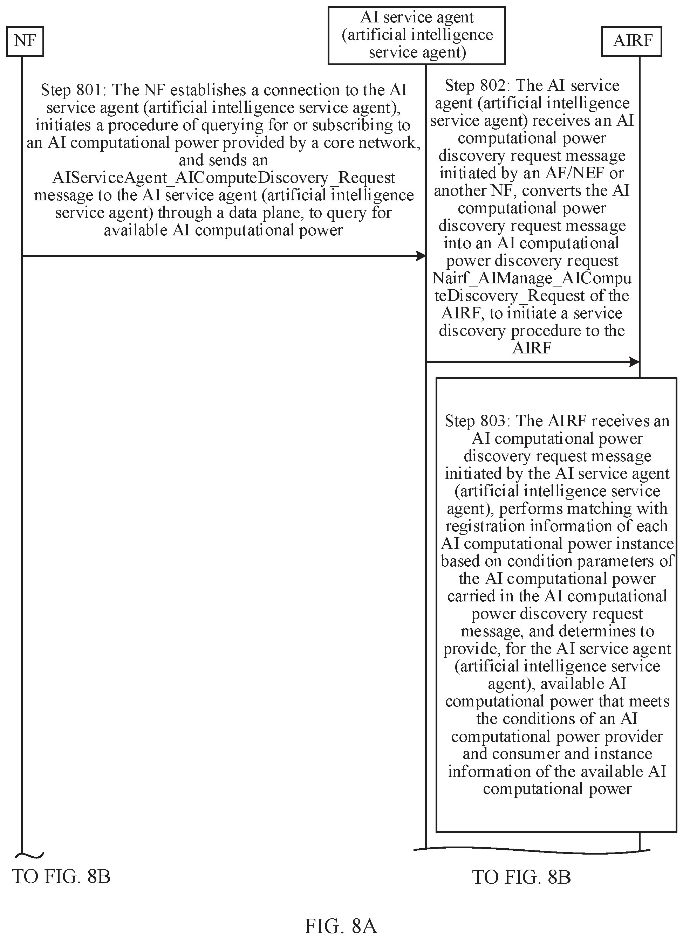

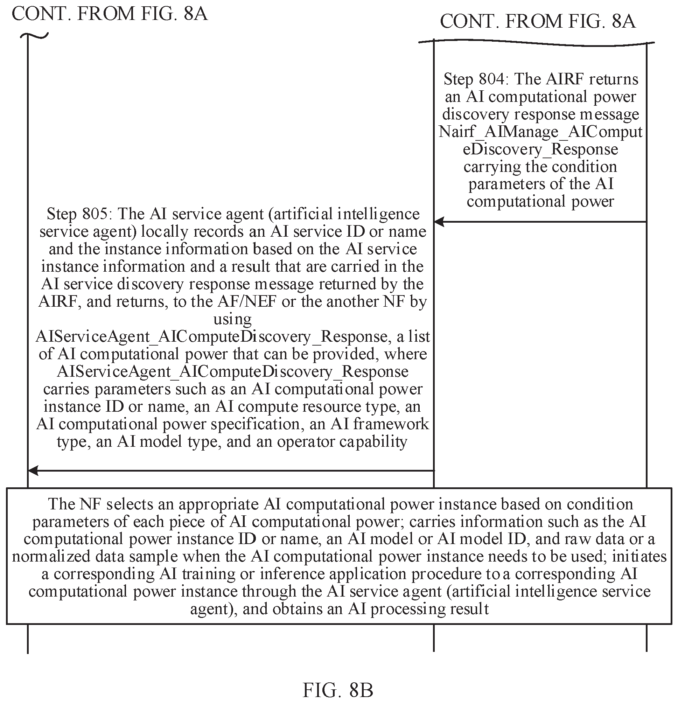

Herein, the NF is used as an example for description. The following steps are performed with reference to FIG. 8A and FIG. 8B.

Step 801: The NF establishes a connection to the AI service agent, initiates a procedure of querying for or subscribing to the AI computational power provided by a core network, and sends an AIServiceAgent_AIComputeDiscovery_Request message to the AI service agent through a data plane, to query for available AI computational power.

The query message may carry some condition parameters (for example, an AI compute resource type (a computational power resource that can run an AI task, such as an X86/ARM CPU, an NPU, or a GPU), an AI computational power specification, an AI framework type (for example, TensorFlow, Mindspore, or SKlearn), an AI model type (such as a CNN, an RNN, or a random forest), and an operator capability (for example, vector computing or matrix computing)) of AI computational power required by the AF/NEF or another NF, and instance information (an address or a fully qualified domain name fully qualified domain name for providing the AI service), so that the core network selects the AI computational power required by the AF/NEF or the another NF and provides the AI computational power for the AF/NEF or the another NF to use.

Step 802: The AI service agent receives an AI computational power discovery request message initiated by the NF, converts the AI computational power discovery request message into an AI computational power discovery request Nairf_AIManage_AIComputeDiscovery_Request of the AIRF, to initiate a service discovery procedure to the AIRF.

The computational power discovery request message carries condition parameters of AI computational power required by a terminal.

Step 803: The AIRF receives an AI computational power discovery request message initiated by the AI service agent, performs matching with registration information of each AI computational power instance based on the condition parameters of the AI computational power carried in the AI computational power discovery request message, and determines to provide, for the AI service agent, available AI computational power that meets conditions of an AI computational power provider and consumer and instance information of the available AI computational power.

Step 804: The AIRF returns an AI computational power discovery response message Nairf_AIManage_AIComputeDiscovery_Response, carrying the condition parameters of the AI computational power.

Step 805: The AI service agent locally records, based on the AI service instance information and a result that are carried in the AI service discovery response message returned by the AIRF, an AI service ID or name and the instance information, and returns, to the NF by using AIServiceAgent_AIComputeDiscovery_Response, a list of AI computational power that can be provided, where AIServiceAgent_AIComputeDiscovery_Response carries parameters such as the AI computational power instance ID or name, the AI compute resource type, the AI computational power specification, the AI framework type, the AI model type, and the operator capability.

The NF receives the list of available AI computational power returned by the AI service agent; selects an appropriate AI computational power instance based on condition parameters of each piece of AI computational power; carries information such as the AI computational power instance ID or name, an AI model or AI model ID (where in this case, the AI model has been stored in a previous AI computational power instance), and raw data (where in this case, a definition description of a normalization format of a data sample corresponding to the AI model needs to be carried) or a normalized data sample when the AI computational power instance needs to be used,; and initiates a corresponding AI training or inference application procedure to the corresponding AI computational power instance through the AI service agent, and obtains an AI processing result.

Specifically, the NF may obtain the AI training model and a processing result with reference to the foregoing procedure in which the UE uses the AI computational power in FIG. 6A and FIG. 6B. Details are not described herein again.

In this way, the NF may implement, through the AI service agent, functions such as discovery of AI computational power deployed on the core network, execution of AI training and inference tasks, processing and normalization of raw data, obtaining of a training result and a model of the AI service, and obtaining of an inference result of each piece of data, so that local intelligent data processing is implemented by using the AI service deployed on the core network.

### Manner 1: The AF/NEF/NF directly uses the AI service and the AI computational power.

### Case 1: The AF/NEF/NF uses the AI service.

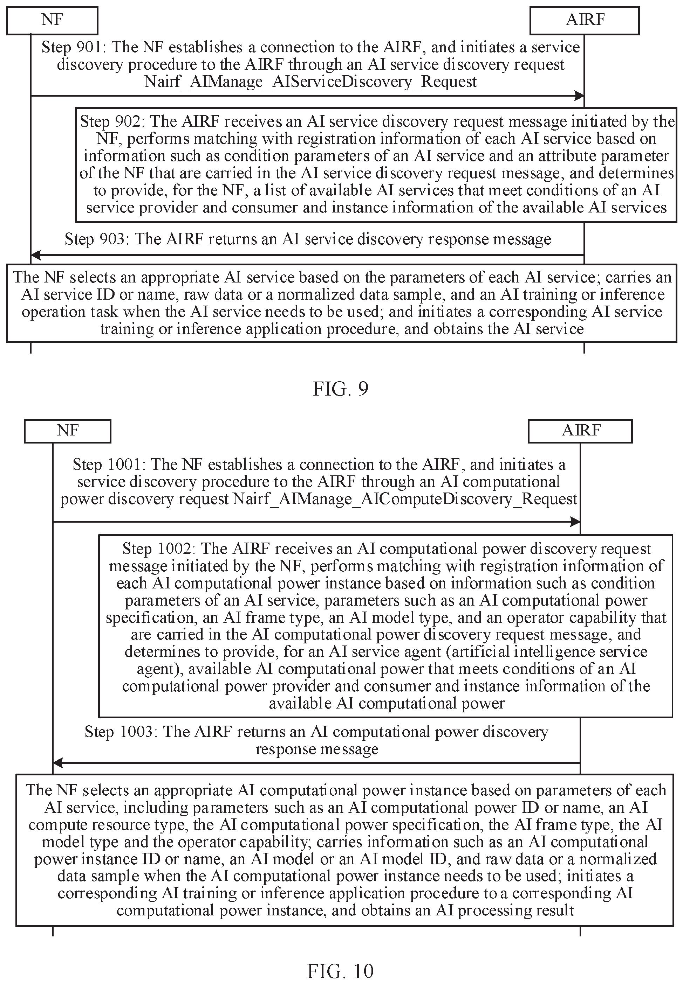

Herein, the NF is used as an example for description. The following steps are performed with reference to FIG. 9.

Step 901: The NF establishes a connection to an AIRF, and initiates a service discovery procedure to the AIRF through an AI service discovery request Nairf_AIManage_AIServiceDiscovery_Request.

The service discovery request message carries a condition parameter (for example, parameters such as a globally defined AI service ID or name, or an AI service type) of an AI service required by the NF and an attribute parameter (for example, an APP name or ID) of the NF, so that a core network selects an AI service that a terminal concerns and provides the AI service for the NF to use.

Step 902: The AIRF receives an AI service discovery request message initiated by the NF, performs matching with registration information of each AI service based on information such as the condition parameters of the AI service and the attribute parameter of the NF that are carried in the AI service discovery request message, and determines to provide, for the NF, a list of available AI services that meet conditions of an AI service provider and consumer and instance information of the available AI services.

Step 903: The AIRF returns an AI service discovery response message.

The service discovery response message is sent by using Nairf_AIManage_AIServiceDiscovery_Response, including the following parameters: the AI service ID or name, the AI service type, a function description, an AI model type, instance information (an address or a fully qualified domain name fully qualified domain name for providing the AI service), and a definition description of a normalization format of a data sample corresponding to an AI model.

Based on the AI service instance information and a result carried in the AI service discovery response message returned by the AIRF, the NF locally records the AI service ID or name and the definition description of the normalization format of the data sample corresponding to the AI model; selects an appropriate AI service based on parameters of each AI service; carries the AI service ID or name, raw data or a normalized data sample, and an AI training or inference operation task when the AI service needs to be used; and initiates a corresponding AI service training or inference application procedure, and obtains the AI service.

Specifically, if the NF wants to train, based on local data and a specific AI service provided by the core network, an AI model that meets indicator requirements on precision, robustness, and the like, the NF selects an available AI service based on AI service information (the AI service ID or name, the AI service type, the function description, the AI model type, and the definition description of the normalization format of the data sample corresponding to the AI model) returned by the core network, and performs feature engineering processing on the raw data based on the definition description of the normalization format of the data sample of the AI service. After the data sample is processed, Nnwdaf_AIManage_AIServiceTrain_Request is initiated to the corresponding AI service instance (where an NWDAF may be replaced by another NF to provide the AI service), and carries the AI service ID or name, the AI training task ID, a normalized data sample, and the specification parameters of the training task (for example, a minimum quantity of samples for training startup, training start time, training duration, a quantity of training iterations, and indicator requirements on training precision, accuracy, and a recall rate for successful training).

The AI service instance provided by the NWDAF or the another NF receives an AI training request initiated by the AF/NEF or the another NF, allocates corresponding training resources based on the AI service ID or name carried in the AI training request, verifies the data sample, and then starts the training task at an appropriate occasion based on the specification parameters (for example, a minimum quantity of samples for training startup, training start time, training duration, a quantity of training iterations, the indicator requirements on training precision, accuracy, and a recall rate for successful training) of the training task. After the training task is completed and a specification parameter is met, a trained AI model is returned to the AF/NEF or the another NF by using Nnwdaf_AIManage_AIServiceTrain_Response (the trained model may be stored in the AI service instance, an AI model ID is allocated and returned to the AF/NEF or the another NF, and then the AF/NEF or the another NF may start the training or an inference task based on the ID) (If a plurality of attempts to start the training task still fails to meet the specification requirements, a training failure result may be returned to the AF/NEF or the another NF).

The AF/NEF or the another NF determines, based on the AI service ID or name, the AI training task ID, the training result code, the AI model, or the AI model ID that are carried in the received training complete response message, to subsequently continue training or inference based on the AI model (the inference task may be performed locally or by using the AI service instance).

Specifically, if the AF/NEF or the another NF wants to infer a result based on local data and a specific AI service provided by the core network, the AF/NEF or the another NF selects an available AI service based on AI service information (the AI service ID or name, the AI service type, the function description, the AI model type, and the definition description of the normalization format of the data sample corresponding to the AI model) returned by the core network. After the data sample is processed, Nnwdaf_AIManage_AIServiceInference_Request is initiated to the corresponding AI service instance (where an NWDAF may be replaced by another NF to provide the AI service), and carries the AI service ID or name, the AI inference task ID, the normalized data sample and an ID of the data sample (where the ID is allocated herein to associate the inference result), and the specification parameters of the inference task (for example, the quantity of batch samples for inference startup, inference start time, and the confidence evaluation result requirement for the inference result).

The AI service instance provided by the NWDAF or the another NF receives the AI inference request initiated by the AF/NEF or the another NF, allocates corresponding inference resources based on the AI service ID or name carried in the AI inference request, verifies the data sample (where if the AI service agent is co-located with the AI service, data normalization and verification may be combined), and then starts the inference task at an appropriate occasion based on the specification parameters (for example, a quantity of batch samples for inference startup, inference start time, and a confidence evaluation result requirement for the inference result) of the inference task. After the inference task is completed and a specification parameter is met, the AI inference task ID and the inference result corresponding to each sample ID are returned to the AF/NEF or the another NF by using Nnwdaf_AIManage_AIServiceInference_Response (If a plurality of attempts to start the inference task still fails to meet the specification requirement, an inference failure result of a specific sample ID may be returned to the AI service agent, and each message may carry a plurality of sample IDs and inference results corresponding to the sample IDs). The AF/NEF or the another NF performs subsequent processing based on the AI service ID or name, the AI inference task ID, and the inference result corresponding to each sample ID that are carried in the received inference complete response message, to complete an interaction procedure of the AI service inference task.

### Case 2: The AF/NEF/NF uses the AI computational power.

Herein, the NF is used as an example for description. The following steps are performed with reference to FIG. 10.

Step 1001: The NF establishes a connection to an AIRF, and initiates a service discovery procedure to the AIRF through an AI computational power discovery request Nairf_AIManage_AIComputeDiscovery_Request.

The service discovery request message carries a condition parameter of the AI computational power required by a terminal (for example, an AI compute resource type (a computational power resource such as an X86/ARM CPU, an NPU, or a GPU that can run an AI task), an AI computational power specification, an AI framework type (for example, TensorFlow, Mindspore, or SKlearn), an AI model type (for example, a CNN, an RNN, or a random forest), and an operator capability (for example, vector calculation or matrix calculation)).

Step 1002: The AIRF receives an AI computational power discovery request message initiated by the NF, performs matching with registration information of each AI computational power instance based on information such as the condition parameters of the AI service, parameters such as the AI computational power specification, the AI model type, and the operator capability that are carried in the AI computational power discovery request message, and determines to provide, for the AI service agent, available AI computational power that meets conditions of an AI computational power provider and consumer and instance information of the available AI computational power.

Step 1003: The AIRF returns an AI computational power discovery response message.

The AI computational power discovery response message is sent by using Nairf_AIManage_AIComputeDiscovery_Response, and parameters that may be carried include: an AI computational power ID or name, the AI compute resource type (a computational power resource such as an X86/ARM CPU, an NPU, or a GPU that can run an AI task), an AI computational power specification, the AI framework type (for example, TensorFlow, Mindspore, or SKlearn), the AI model type (for example, a CNN, an RNN, or a random forest), an operator capability (for example, vector computing or matrix computing), and instance information (an address or a fully qualified domain name fully qualified domain name for providing the AI service).

The NF receives a list of available AI computational power returned by the AIRF; selects an appropriate AI computational power instance based on parameters of each AI service, including parameters such as an AI computational power ID or name, an AI compute resource type (a computational power resource such as an X86/ARM CPU, an NPU, or a GPU that can run an AI task), an AI computational power specification, an AI framework type (for example, TensorFlow, Mindspore, or SKlearn), an AI model type (for example, a CNN, an RNN, or a random forest), and an operator capability (for example, vector computing or matrix computing); carries information such as the AI computational power instance ID or name, an AI model or AI model ID (where in this case, the AI model has been stored in a previous AI computational power instance), and raw data (where in this case, a definition description of a normalization format of a data sample corresponding to the AI model needs to be carried) or a normalized data sample when the AI computational power instance needs to be used; and initiates a corresponding AI training or inference application procedure to the corresponding AI computational power instance, and obtains an AI processing result.

Specifically, if the AF/NEF or another NF wants to train, based on an initial model, local data, and a specific AI computational power instance provided by the core network, an AI model that meets indicator requirements on precision, robustness, and the like, the AF/NEF or the another NF selects an available AI computational power instance based on AI computational power instance information (parameters such as an AI computational power ID or name, an AI compute resource type (a computational power resource such as an X86/ARM CPU, an NPU, or a GPU that can run an AI task), an AI computational power specification, an AI framework type (for example, TensorFlow, Mindspore, or SKlearn), an AI model type (for example, a CNN, an RNN, or a random forest), and an operator capability (for example, vector computing or matrix computing)) returned by the core network. After the data sample is processed, AIManage_AIServiceTrain_Request is initiated to a corresponding AI service instance (where an NWDAF may be replaced by the another NF to provide the AI service), and carries information such as an AI computational power instance ID or name, an AI model or AI model ID (where in this case, the AI model has been stored in a previous AI computational power instance), an AI training task ID, a raw data (where in this case, a definition description of a normalization format of a data sample corresponding to an AI model needs to be carried) or a normalized data sample, specification parameters of a training task (for example, a minimum quantity of samples for training startup, training start time, training duration, a quantity of training iterations, indicator requirements on training precision, accuracy, and a recall rate for successful training), to initiate the training task to the corresponding AI computational power instance.

The AI compute instance provided by the NWDAF or the another NF receives an AI training request initiated by the AF/NEF or the another NF, allocates a corresponding training resource based on the AI computational power ID or name carried in the AI training request, verifies the data sample, and then starts the training task at an appropriate occasion based on the AI model or AI model ID, the AI training task ID, and the specification parameters of the training task (for example, a minimum quantity of samples for training startup, training start time, training duration, a quantity of training iterations, indicator requirements on training precision, accuracy, and a recall rate for successful training) that are specified by the training task. After the training task is completed and a specification parameter is met, a trained AI model is returned to the AF/NEF or the another NF by using AIManage_AIServiceTrain_Response (the trained model may be stored in the AI compute instance, an AI model ID is allocated and returned to the UE, and then the UE may start the training or inference task based on the ID) (If a plurality of attempts to start the training task still fails to meet the specification requirement, a training failure result may be returned to the AF/NEF or the another NF).

The AF/NEF or the another NF determines, based on the AI service ID or name, the AI model ID or the AI training task ID, the training result code, and the AI model or AI model ID that are carried in the received training complete response message, to subsequently continue training or inference based on the AI model (the inference task may be performed locally or by using the AI computational power instance).

Specifically, if the AF/NEF or the another NF wants to infer a result based on local data and a specific AI computational power instance provided by the core network, the AF/NEF or the another NF selects an available AI computational power instance based on AI computational power instance information (parameters such as an AI computational power ID or name, an AI compute resource type (a computational power resource such as an X86/ARM CPU, an NPU, or a GPU that can run an AI task), an AI computational power specification, an AI framework type (for example, TensorFlow, Mindspore, or SKlearn), an AI model type (for example, a CNN, an RNN, or a random forest), and an operator capability (for example, vector computing or matrix computing)) returned by the core network. After the data sample is processed, AIManage_AIComputeInference_Request is initiated to the corresponding AI compute instance (where an NWDAF may be replaced by another NF to provide the AI service), and carries the AI computational power instance ID or name, the AI inference task ID, the normalized data sample and an ID of the data sample (where the ID is allocated herein to associate with the inference result), and the specification parameters of the inference task (for example, the quantity of batch samples for inference startup, inference start time, and the confidence evaluation result requirement for the inference result).

The AI compute instance provided by the NWDAF or the another NF receives the AI inference request initiated by the AF/NEF or the another NF, allocates corresponding inference resources based on the AI computational power instance ID or name carried in the AI inference request, verifies the data sample (where if the AI service agent is co-located with the AI service, data normalization and verification may be combined), and then starts the inference task at an appropriate occasion based on the AI model and inference specification parameters of the inference task (for example, a quantity of batch samples for inference startup, the inference start time, and confidence evaluation result requirement for the inference result). After the inference task is completed and a specification parameter is met, the AI inference task ID and the inference result corresponding to each sample ID are returned to the AF/NEF or the another NF by using AIManage_AIServiceInference_Response (If a plurality of attempts to start the inference task still fails to meet the specification requirement, an inference failure result of a specific sample ID may be returned to the AF/NEF or the another NF, and each message may carry a plurality of sample IDs and inference results corresponding to the sample IDs).

The AF/NEF or the another NF performs subsequent processing based on the AI computational power instance ID or name, the AI inference task ID, the AI model ID or the inference task ID, and the inference result corresponding to each sample ID that are carried in the received inference complete response message, to complete an interaction procedure of the AI service inference task.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

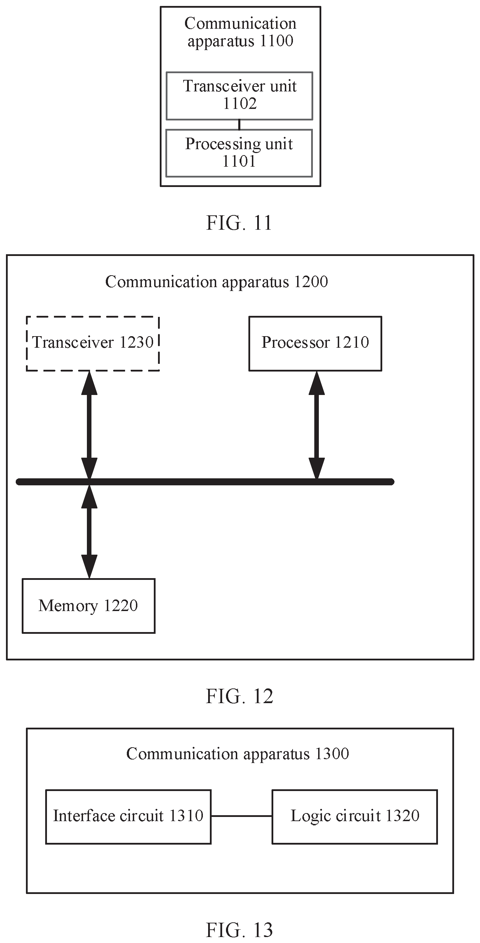

When an integrated unit is used, FIG. 11 is a possible example block diagram of a communication apparatus according to an embodiment of this application. As shown in FIG. 11, the communication apparatus 1100 may include a processing unit 1101 and a transceiver unit 1102. The processing unit 1101 is configured to control and manage an action of the communication apparatus 1100. The transceiver unit 1102 is configured to support communication between the communication apparatus 1100 and another device. Optionally, the transceiver unit 1102 may include a receiving unit and/or a sending unit, which are respectively configured to perform a receiving operation and a sending operation. Optionally, the communication apparatus 1100 may further include a storage unit, configured to store program code and/or data of the communication apparatus 1100. The transceiver unit may be referred to as an input/output unit, a communication unit, or the like. The transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the first network function, the second network function, the third network function, the fourth network function, or the like.

In an embodiment, the communication apparatus 1100 is the first network function. The transceiver unit 1102 is configured to receive a request message from the third network function, where the request message is used for requesting an access address of a second network function associated with target artificial intelligence AI information. The processing unit 1101 is configured to query an association relationship based on the request message, to obtain the access address of the second network function associated with the target AI information, where the association relationship indicates at least one piece of AI information supported by at least one second network function and a relationship between the at least one piece of AI information supported by the at least one second network function and an access address of the second network function associated with each piece of AI information, and the target AI information is one of the at least one piece of AI information. The transceiver unit 1102 is further configured to send a request response message to the third network function, where the request response message indicates the access address of the second network function associated with the target AI information.

In an optional manner, the request message is a subscription request message. The transceiver unit 1102 is configured to send the subscription success notification message to the third network function, and send, to the third network function, the access address of the second network function associated with the at least one piece of AI information.

In an optional manner, the request message is a query request message. The transceiver unit 1102 is configured to send, to the third network function, the access address of the second network function associated with the target AI information.

In an optional manner, the transceiver unit 1102 is configured to receive a registration request message from the at least one second network function, where the registration request message indicates the at least one piece of AI information supported by the second network function and the access address of the second network function associated with each piece of AI information. The processing unit 1101 is configured to determine the association relationship based on the registration request message.

In an optional manner, the transceiver unit 1102 is configured to send a monitoring message to the second network function, where the monitoring message is used for monitoring an operating status of the second network function. The transceiver unit 1102 is further configured to receive a monitoring response message from the second network function.

In an optional manner, the third network function is a terminal. The transceiver unit 1102 is further configured to receive the request message sent by the third network function through a fourth network function, where the fourth network function is configured to perform format conversion on a message exchanged between the terminal and the first network function, and/or perform identity authentication on the terminal and the first network function.

In an optional manner, the AI information includes an AI service and/or AI computational power.

In an optional manner, the AI information is an AI service, and the registration request message includes an identifier of the AI service and an access address of a second network function that provides the AI service.

In an optional manner, the registration request information further includes one or more of the following:
a type of the AI service, a model type supported by the AI service, a service object of the AI service, a data format supported by the AI service, and a data computing scale of the AI service.

The service object of the AI service includes a terminal device type, an APP name, an end user belonging to a preset number range, geographical location information, slice information, and an access point identifier.

In an optional manner, the AI information is AI computational power, and the registration request information includes an identifier of the AI computational power and an access address of a second network function that provides the AI computational power.

In an optional manner, the registration request information further includes one or more of the following:
a computational power type of the AI computational power, a computational power specification of the AI computational power, an AI framework type indicated by the AI computational power, an AI model type indicated by the AI computational power, and operator information of the AI computational power.

In another embodiment, the communication apparatus 1100 is the fourth network function. The transceiver unit 1102 is configured to receive a request message from the third network function, where the request message is used for requesting an access address of a second network function associated with target artificial intelligence AI information. The transceiver unit 1102 is further configured to send the request message to the first network function; receive a request response message from the first network function, where the request response message indicates the access address of the second network function associated with the target AI information; and send the request response message to the third network function.

In an optional manner, the request message is a subscription request message. The transceiver unit 1102 is configured to receive a subscription success notification message; and receive, from the first network function, an access address of a second network function associated with at least one piece of AI information.

In an optional manner, the request message is a query request message. The transceiver unit 1102 is configured to receive, from the first network function, an access address of a second network function associated with target AI information.

In an optional manner, the third network function is a terminal. The processing unit 1101 is configured to perform format conversion on a message exchanged between the third network function and the first network function; and/or perform identity authentication on the third network function and the first network function.

In an optional manner, the transceiver unit 1102 is configured to receive to-be-processed data from the terminal; convert the to-be-processed data into a data format corresponding to the AI information required by the terminal, and then send converted data to an access address of a second network function associated with the AI information required by the terminal; receive a data processing result from the second network function; and send the data processing result to the terminal.

In still another embodiment, the communication apparatus 1100 is a third network function. The transceiver unit 1102 is configured to send a request message to a fourth network function, where the request message is used for requesting an access address of a second network function associated with target artificial intelligence AI information. The transceiver unit 1102 is further configured to receive a request response message from the fourth network function, where the request response message indicates the access address of the second network function associated with the target AI information; send, through the fourth network function, to-be-processed data to the access address of the second network function associated with the target AI information; and receive a data processing result from the second network function through the fourth network function.

In an optional manner, the communication apparatus 1100 is a terminal.

In yet another embodiment, the communication apparatus 1100 is a second network function. The transceiver unit 1102 is configured to send a registration request message to a first network function, where the registration request message indicates at least one piece of AI information supported by the second network function and an access address of the second network function associated with each piece of AI information. The transceiver unit 1102 is further configured to receive a registration success response message from the second network function.

In an optional manner, the transceiver unit 1102 is further configured to receive a monitoring message from the first network function, where the monitoring message is used for monitoring an operating status of the second network function; and send a monitoring response message to the first network function, where the monitoring response message includes the operating status of the second network function.

In an optional manner, the AI information includes an AI service and/or AI computational power.

In an optional manner, the AI service includes one or more of the following: an identifier of the AI service, an access address of a second network function that provides the AI service, a type of the AI service, a model type supported by the AI service, a service object of the AI service, a data format supported by the AI service, and a data computing scale of the AI service. The service object of the AI service includes a terminal device type, an APP name, an end user belonging to a preset number range, geographical location information, slice information, and an access point identifier.

In an optional manner, the AI computational power includes one or more of the following:
an identifier of the AI computational power, a computational power type of the AI computational power, a computational power specification of the AI computational power, an AI framework type indicated by the AI computational power, an AI model type indicated by the AI computational power, and operator information of the AI computational power.

FIG. 12 shows a communication apparatus 1200 further provided in this application. The communication apparatus 1200 may be a chip or a chip system. The communication apparatus may be located in a device in any one of the foregoing method embodiments, for example, the access network device or the first core network device, to perform an action corresponding to the device.

Optionally, the chip system may include a chip, or may include a chip and another discrete component.

The communication apparatus 1200 includes a processor 1210.

The processor 1210 is configured to execute a computer program stored in a memory 1220, to implement an action of each device in any one of the foregoing method embodiments.

The communication apparatus 1200 may further include the memory 1220, configured to store the computer program.

Optionally, the memory 1220 is coupled to the processor 1210. The coupling is an indirect coupling or a communication connection between apparatuses, units, or modules, may be in an electrical form, a mechanical from, or another form, and is used for information exchange between the apparatuses, the units, or the modules. Optionally, the memory 1220 and the processor 1210 are integrated together.

There may be one or more processors 1210 and one or more memories 1220. This is not limited.

Optionally, in an actual application, the communication apparatus 1200 may include or may not include a transceiver 1230. A dashed box is used for illustration in the figure. The communication apparatus 1200 may exchange information with another device through the transceiver 1230. The transceiver 1230 may be a circuit, a bus, a transceiver, or any other apparatus that may be configured to exchange information.

In a possible implementation, the communication apparatus 1200 may be the access network device or the first core network device in the foregoing method embodiments.

A specific connection medium between a transceiver 1230, the processor 1210, and the memory 1220 is not limited in this embodiment of this application. In this embodiment of this application, the memory 1220, the processor 1210, and the transceiver 1230 are connected through a bus in FIG. 12. The bus is represented by using a thick line in FIG. 10. A manner of a connection between other components is merely an example for description, and is not limited thereto. The bus may be classified into an address bus, a data bus, a control bus, and the like. For ease of representation, only one thick line indicates the bus in FIG. 12, but this does not mean that there is only one bus or only one type of bus. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). Alternatively, the memory may be any other medium that can be configured to carry or store expected program code in a form of an instruction or a data structure and that can be accessed by a computer, but is not limited thereto. Alternatively, the memory in embodiments of this application may be a circuit or any other apparatus that can implement a storage function, and is configured to store a computer program, program instructions, and/or data.

Based on the foregoing embodiments, refer to FIG. 13. An embodiment of this application further provides another communication apparatus 1300, including an interface circuit 1310 and a logic circuit 1320. The interface circuit 1310 may be understood as an input/output interface, and may be configured to perform sending and receiving steps of each device in any one of the foregoing method embodiments. The logic circuit 1320 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions, and when the instructions are executed, the method performed by each device in any one of the foregoing method embodiments is caused to be implemented. The computer-readable storage medium may include any medium that can store program code, such as a USB flash drive, a removable hard disk drive, a read-only memory, a random-access memory, a magnetic disk, or an optical disc.

Based on the foregoing embodiments, an embodiment of this application provides a communication system. The communication system includes the first network function, the second network function, the third network function, and the fourth network function mentioned in any one of the foregoing method embodiments, and may be configured to perform the method performed by each device in any one of the foregoing method embodiments.

In addition, the communication system may further include a terminal (for example, UE). The terminal may perform data exchange with an access network device and a core network device, to perform a related method in any one of the foregoing method embodiments.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage medium (including but not limited to a magnetic disk memory, a compact disc read-only memory (compact disc read-only memory, CD-ROM), an optical memory, and the like) that include computer-usable program code.

This application is described with reference to the flowcharts and/or the block diagrams of the method, the apparatus (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. A communication method, applied to a first network function, and comprising:
receiving a request message from a third network function, wherein the request message is used for requesting an access address of a second network function associated with target artificial intelligence AI information;
querying an association relationship based on the request message, to obtain the access address of the second network function associated with the target AI information, wherein the association relationship indicates at least one piece of AI information supported by at least one second network function and a relationship between the at least one piece of AI information supported by the at least one second network function and an access address of the second network function associated with each piece of AI information, and the target AI information is one of the at least one piece of AI information; and
sending a request response message to the third network function, wherein the request response message indicates the access address of the second network function associated with the target AI information.

2. The method according to claim 1, wherein the request message is a subscription request message; and
the sending the request response message to the third network function comprises:
sending a subscription success notification message to the third network function, and sending, to the third network function, an access address of a second network function associated with the at least one piece of AI information.

3. The method according to claim 1, wherein the request message is a query request message; and
the sending the request response message to the third network function comprises:
sending, to the third network function, the access address of the second network function associated with the target AI information.

4. The method according to any one of claims 1 to 3, wherein the method further comprises:
receiving a registration request message from the at least one second network function, wherein the registration request message indicates the at least one piece of AI information supported by the second network function and the access address of the second network function associated with each piece of AI information; and
determining the association relationship based on the registration request message.

5. The method according to claim 4, wherein the method further comprises:
sending a monitoring message to the second network function, wherein the monitoring message is used for monitoring an operating status of the second network function; and
receiving a monitoring response message from the second network function.

6. The method according to any one of claims 1 to 5, wherein the third network function is a terminal; and
the receiving the request message from the third network function comprises:
receiving the request message sent by the third network function through a fourth network function, wherein the fourth network function is configured to perform format conversion on a message exchanged between the terminal and the first network function, and/or perform identity authentication on the terminal and the first network function.

7. The method according to any one of claims 1 to 6, wherein the AI information comprises an AI service and/or AI computational power.

8. The method according to claim 4, wherein the AI information is an AI service, and the registration request message comprises an identifier of the AI service and an access address of a second network function that provides the AI service.

9. The method according to claim 8, wherein the registration request information further comprises one or more of the following:
a type of the AI service, a model type supported by the AI service, a service object of the AI service, a data format supported by the AI service, and a data computing scale of the AI service, wherein
the service object of the AI service comprises a terminal device type, an APP name, an end user belonging to a preset number range, geographical location information, slice information, and an access point identifier.

10. The method according to claim 4, wherein the AI information is AI computational power, and the registration request information comprises an identifier of the AI computational power and an access address of a second network function that provides the AI computational power.

11. The method according to claim 10, wherein the registration request information further comprises one or more of the following:
a computational power type of the AI computational power, a computational power specification of the AI computational power, an AI framework type indicated by the AI computational power, an AI model type indicated by the AI computational power, and operator information of the AI computational power.

12. A communication method, applied to a fourth network function, and comprising:
receiving a request message from a third network function, wherein the request message is used for requesting an access address of a second network function associated with target artificial intelligence AI information;
sending the request message to a first network function;
receiving a request response message from the first network function, wherein the request response message indicates the access address of the second network function associated with the target AI information; and
sending the request response message to the third network function.

13. The method according to claim 12, wherein the request message is a subscription request message; and
the receiving the request response message from the first network function comprises:
receiving a subscription success notification message; and receiving, from the first network function, an access address of a second network function associated with at least one piece of AI information.

14. The method according to claim 12, wherein the request message is a query request message; and
the receiving the request response message from the first network function comprises:
receiving, from the first network function, the access address of the second network function associated with the target AI information.

15. The method according to any one of claims 12 to 14, wherein the third network function is a terminal; and
the method further comprises:
performing format conversion on a message exchanged between the third network function and the first network function; and/or
performing identity authentication on the third network function and the first network function.

16. The method according to claim 15, further comprising:
receiving to-be-processed data from the terminal;
converting the to-be-processed data into a data format corresponding to AI information required by the terminal, and sending converted data to an access address of a second network function associated with the AI information required by the terminal;
receiving a data processing result from the second network function; and
sending the data processing result to the terminal.

17. A communication method, applied to a third network function, and comprising:
sending a request message to a fourth network function, wherein the request message is used for requesting an access address of a second network function associated with target artificial intelligence AI information;
receiving a request response message from the fourth network function, wherein the request response message indicates the access address of the second network function associated with the target AI information;
sending, through the fourth network function, to-be-processed data to the access address of the second network function associated with the target AI information; and
receiving, through the fourth network function, a data processing result from the second network function.

18. The method according to claim 17, wherein the third network function is a terminal.

19. A communication method, applied to a second network function, and comprising:
sending a registration request message to a first network function, wherein the registration request message indicates at least one piece of AI information supported by the second network function and an access address of the second network function associated with each piece of AI information; and
receiving a registration success response message from the second network function.

20. The method according to claim 19, wherein the method further comprises:
receiving a monitoring message from the first network function, wherein the monitoring message is used for monitoring an operating status of the second network function; and
sending a monitoring response message to the first network function, wherein the monitoring response message comprises the operating status of the second network function.

21. The method according to claim 19 or 20, wherein the AI information comprises an AI service and/or AI computational power.

22. The method according to claim 21, wherein the AI service comprises one or more of the following: an identifier of the AI service, an access address of a second network function that provides the AI service, a type of the AI service, a model type supported by the AI service, a service object of the AI service, a data format supported by the AI service, and a data computing scale of the AI service, wherein
the service object of the AI service comprises a terminal device type, an APP name, an end user belonging to a preset number range, geographical location information, slice information, and an access point identifier.

23. The method according to claim 21, wherein the AI computational power comprises one or more of the following:
an identifier of the AI computational power, a computational power type of the AI computational power, a computational power specification of the AI computational power, an AI framework type indicated by the AI computational power, an AI model type indicated by the AI computational power, and operator information of the AI computational power.

24. A communication apparatus, comprising a functional module that implements the method according to any one of claims 1 to 23.

25. A communication apparatus, comprising at least one processor and a memory, wherein
the memory is configured to store a computer program or instructions; and
the at least one processor is configured to execute the computer program or the instructions, to cause the method according to any one of claims 1 to 23 to be performed.

26. A chip system, wherein the chip system comprises a processing circuit, and the processing circuit is coupled to a storage medium; and
the processing circuit is configured to execute a part or all of a computer program or instructions on the storage medium, and when the part or all of the computer program or the instructions are executed, the method according to any one of claims 1 to 23 is implemented.

27. A computer-readable storage medium, wherein the computer-readable storage medium stores instructions, and when the instructions are executed by a computer, the method according to any one of claims 1 to 23 is performed.

28. A computer program product comprising a computer program or instructions, wherein when the computer program product runs on a computer, the method according to any one of claims 1 to 23 is performed.
